# EUROPEAN PATENT SPECIFICATION

(11) **EP 1 814 937 B1**
(45) Date of publication and mention of the grant of the patent: **29.07.2009**
(21) Application number: 05801714.6
(22) Date of filing: 31.10.2005
(51) Int. Cl.: C08K 5/00, C08K 5/3435, C08K 5/3475, C08K 5/3492

(54) **ANTIMICROBIAL POLYMER COMPOSITIONS HAVING IMPROVED DISCOLORATION RESISTANCE**
ANTIMIKROBIELLE POLYMERZUSAMMENSETZUNGEN MIT VERBESSERTER VERFÄRBUNGSBESTÄNDIGKEIT
FORMULES POLYMÈRES ANTIMICROBIENNES PRÉSENTANT UNE RÉSISTANCE AMÉLIORÉE À LA DÉCOLORATION

(30) Priority: 09.11.2004 EP 04105601
(43) Date of publication of application: 08.08.2007
(73) Proprietor: Ciba Holding Inc., 4057 Basel (CH)
(72) Inventor: HERBST, Heinz, 79541 Lörrach (DE); ERGENC, Nadi, Croton on Hudson, NY 10520 (US)
(86) International application number: PCT/EP2005/055648
(87) International publication number: WO 2006/051048

(56) References cited:
- EP-A- 0 309 400
- EP-A- 0 309 402
- EP-A- 0 870 797
- WO-A-00/66676
- WO-A-01/36396
- DE-A- 19 956 253
- US-A- 5 538 840

## Description

The instant invention relates to specific polymer compositions, containing a selected antimicrobial compound and a UV-absorber. A further aspect of the invention is a process to prevent polymer compositions, containing antimicrobials, from yellowing during exposure to actinic radiation by adding a UV-absorber or mixture of UV-absorbers to the polymer.

Certain silver compounds have traditionally been used in reprographic materials, where image formation is initiated by controlled exposure to light (WO00/66676, DE-A-19956253, EP-A-870797, US-5538840). Some cosmetic compositions containing UV absorbing compounds, which also show antimicrobial activity, are disclosed in WO01/36396.

Polymer compositions containing antimicrobial compounds are frequently used in hygiene applications, such as for example in shower bases or toilette lids. Although these polymers are not directly exposed to sunlight, the little UV radiation remaining behind glass windows can be sufficient to cause a yellowing of the antimicrobial polymer. This is particularly undesired for transparent materials and for white shades or lightly colored shades. Furthermore these polymer articles may be exposed to direct sunlight during storage or transportation and even short exposure times can lead to strong discoloration.

The instant invention has solved this problem by adding a UV-absorber or a mixture of UV-absorbers to such polymers. The discoloration, caused by the degradation of the antimicrobial compound can be significantly reduced and in many cases almost totally suppressed.

One aspect of the invention is a composition comprising
a1) a crosslinkable urea formaldehyde resins, a crosslinkable melamine formaldehyde resin, a crosslinkable melamine phenol formaldehyde resin, a crosslinkable epoxy resin, a crosslinkable polyurethane, a crosslinkable rubber, a crosslinkable acrylic or methacrylic resin or a crosslinkable unsaturated polyester resin; or
a2) a polymerizable monomer which is an acrylic or methacrylic acid derivative; or
a3) a thermoplastic polyester, a thermoplastic polyacrylate or methacrylate, a thermoplastic polyamide, a thermoplastic polystyrene, a thermoplastic halogen containing polymer, a thermoplastic polyacetal or a thermoplastic polyurethane; or
a4) a mixture of components a1) to a3); wherein is incorporated
b) an antimicrobial compound selected from the group consisting of 2-phenyl phenol, 2,4,4'-trichloro-2'-hydroxydiphenylether, 4,4'-dichloro-2-hydroxydiphenylether, 2,2'-methylenbis-(4-chloro-phenol), 4-(2-t-butyl-5-methylphenoxy)-phenol, 3-(4-chlorophenyl-(3,4-dichloro-phenyl)-urea, 2,4,6-trichlrophenol, AgCl, AgNO₃, Ag₂SO₄, Silver-Zeolite, Silver-Glass, Silver-Zirkonate, Silver-Apatite, thiabendazole, tebuconazole, 1 H-benzimidazol-2-ylcarbamic acid methyl ester, 10,10'-oxybis-phenoxyarsine, Zink pyrithione, 2-n-octyl-4-isothiazolin-3-on, n-butyl-1,2-benzisothiazolin-3-one, 4,5-di-chloro-N-n-octyl-isothiazolin-3-one and mixtures thereof; and
c) a UV-absorber selected from the group consisting of hydroxy benzophenones, hydroxyphenyl benzotriazoles, oxalic acid anilides, hydroxyphenyl triazines and mixtures thereof.

Thermoplastic polystyrenes are for example polystyrene, poly(p-methylstyrene), poly(a-methylstyrene). Also included are copolymers derived from styrene or α-methylstyrene. Homopolymers and copolymers may have any stereostructure including syndiotactic, isotactic, hemi-isotactic or atactic; where atactic polymers are preferred. Stereoblock polymers are also included.

Copolymers including aforementioned vinyl aromatic monomers and comonomers are selected from dienes, nitriles, acids, maleic anhydrides, maleimides, vinyl acetate and vinyl chloride or acrylic derivatives and mixtures thereof, for example styrene/butadiene, styrene/acrylonitrile, styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate or a diene polymer; and block copolymers of styrene such as styrene/butadiene/styrene, styrene/isoprene/styrene.

Also embraced are graft copolymers of vinyl aromatic monomers such as styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
Thermoplastic halogen-containing polymers such as polychloroprene, polyvinylchloride, polyvinylidene chloride, as well as copolymers thereof such as vinyl chloride/vinyliden chloride, vinyl chloride/vinyl acetate or vinyl chloride/vinyl acetate copolymers.

Under thermoplastic polyacrylates and polymethacrylates there is understood polymethyl methacrylates, polyacrylamides and polyacrylonitriles, also impact-modified with butyl acrylate.

Copolymers of the monomers with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.

Thermoplastic polyacetals are for example polyoxymethylene and those polyoxymethylenes which contain ethylene oxide as a comonomer; polyacetals modified with thermoplastic polyurethanes, acrylates or MBS.

Thermoplastic polyurethanes are derived from hydroxyl-terminated polyethers, polyesters or polybutadienes on the one hand and aliphatic or aromatic polyisocyanates on the other, as well as precursors thereof.

Thermoplastic polyamides and copolyamides are derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).

Thermoplastic polyesters are derived from dicarboxylic acids and diols and/or from hydroxycarboxylic acids or the corresponding lactones, for example polyethylene terephthalate, polypropylene terephthalate, polybutylene terephthalate, poly-1,4-dimethylolcyclohexane terephthalate, polyalkylene naphthalate (PAN) and polyhydroxybenzoates, as well as block copolyether esters derived from hydroxyl-terminated polyethers; and also polyesters modified with polycarbonates or MBS.

Crosslinked polymers are derived from aldehydes on the one hand and phenols, ureas and melamines on the other hand, such as phenol/formaldehyde resins, urea/formaldehyde resins, melamine/phenol/formaldehyde resins and melamine/formaldehyde resins.

Crosslinkable polyurethanes are derived from polyetherpolyoles, polyester polyoles, trioles, ethylene diamines, pentaerythritoles, sorbitols, aliphatic, cycloaliphatic, heterocyclic or aromatic polyisocyanate compounds, and catalysts

Crosslinkable rubber (peroxide and sulfur cured) such as natural rubber, EPDM, NBR, Polyisoprene, Styrene Butadiene Rubber, Polybutadiene, Polychloroprene, Silicon rubber, EVA rubber,

Crosslinkable epoxy resins are derived from aliphatic, cycloaliphatic, heterocyclic or aromatic glycidyl compounds, e.g. products of diglycidyl ethers of bisphenol A and bisphenol F, which are crosslinked with customary hardeners such as anhydrides or amines, with or without accelerators.

Crosslinkable acrylic or methacrylic resins are for example derived from substituted acrylates, for example epoxy acrylates, urethane acrylates or polyester acrylates.

Crosslinkable unsaturated polyester resins are for example derived from copolyesters of saturated and unsaturated dicarboxylic acids with polyhydric alcohols and vinyl compounds as crosslinking agents.

The crosslinkable unsaturated polyester and acrylate methacrylate resins may contain one or more ethylenically unsaturated double bonds. They may be lower molecular weight (monomeric) or higher molecular weight (oligomeric). Examples of monomers having a double bond are hydroxyalkyl acrylates and methacrylates, e.g. 2-hydroxyethyl acrylate or methacrylate. Further examples are, acrylamide, methacrylamide, N-substituted (meth)acrylamides and acrylic or methacrylic acid.

Unsaturated polyesters frequently are mixed with styrene to obtain the desired properties. This is also a preferred embodiment of the instant invention.

Examples of monomers having more than one double bond are propylene glycol diacrylate, dipropylene glycol diacrylate, tripropylene glycol diacrylate, neopentyl glycol diacrylate, hexamethylene glycol diacrylate pentaerythritol triacrylate, tris(hydroxyethyl) isocyanurate triacrylate (Sartomer 368; from Cray Valley.

It is also possible in crosslinkable systems to use acrylic esters of alkoxylated polyols, for example glycerol ethoxylate diacrylate, glycerol propoxylate diacrylate, pentaerythritol propoxylate triacrylate, pentaerythritol propoxylate tetraacrylate, neopentyl glycol ethoxylate diacrylate or neopentyl glycol propoxylate diacrylate. The degree of alkoxylation of the polyols used may vary.

Examples of higher molecular weight (oligomeric) polyunsaturated compounds having additionally polar groups, such as -OH, -COOH or NH₂ are acrylated epoxy resins, acrylated or vinyl-ether- or epoxy-group-containing polyesters, polyurethanes and polyethers. Further examples of unsaturated oligomers are unsaturated polyester resins, which are usually produced from maleic acid, phthalic acid and one or more diols and have molecular weights of about from 500 to 3000.

Suitable polyols are aromatic and especially aliphatic and cycloaliphatic polyols. Examples of aromatic polyols are hydroquinone, 4,4'-dihydroxydiphenyl, 2,2-di(4-hydroxyphenyl)propane, and novolaks and resols. Examples of polyepoxides are those based on the said polyols, especially the aromatic polyols and epichlorohydrin. Also suitable as polyols are polymers and copolymers that contain hydroxyl groups in the polymer chain or in side groups, e.g. polyvinyl alcohol and copolymers thereof or polymethacrylic acid hydroxyalkyl esters or copolymers thereof. Further suitable polyols are oligoesters having hydroxyl terminal groups.

Examples of aliphatic and cycloaliphatic polyols include alkylenediols having preferably from 2 to 12 carbon atoms, such as ethylene glycol, 1,2- or 1,3-propanediol, 1,2-, 1,3- or 1,4-butanediol, pentanediol, hexanediol, octanediol, dodecanediol, diethylene glycol, triethylene glycol, polyethylene glycols having molecular weights of preferably from 200 to 1500, 1,3-cyclopentanediol, 1,2-, 1,3- or 1,4-cyclohexanediol, 1,4-dihydroxymethylcyclohexane, glycerol, tris(β-hydroxyethyl)amine, trimethylolethane, trimethylolpropane, pentaerythritol, dipentaerythritol and sorbitol.

The polyols are partially esterified by one or by different unsaturated carboxylic acid(s).

Examples of esters are:
pentaerythritol diacrylate, pentaerythritol triacrylate, dipentaerythritol diacrylate, dipentaerythritol triacrylate, dipentaerythritol tetraacrylate, dipentaerythritol pentaacrylate, pentaerythritol dimethacrylate, pentaerythritol trimethacrylate, dipentaerythritol dimethacrylate, dipentaerythritol tetramethacrylate, pentaerythritol diitaconate, dipentaerythritol trisitaconate, sorbitol triacrylate, sorbitol tetraacrylate, pentaerythritol-modified triacrylate, sorbitol tetramethacrylate, sorbitol pentaacrylate, oligoester acrylates and methacrylates, glycerol di-acrylate,.

Special preference is given to acrylic acid, hexanediol monoacrylate, pentaerythritol triacrylate, pentaerythritol diacrylate, pentaerythritol monoacrylate, 2-hydroxyethyl acrylate, hydroxypropyl acrylate, tri(propylene glycol) glycerolate diacrylate, 2,3-dihydroxypropylacrylate, 2,3-dihydroxypropylacrylate, glycerol 1,3-diglycerolate diacrylate, sorbitol monoacrylate, .N.-(2,3,4,5,6-pentahydroxy-hexyl)-acrylamide and the corresponding methacrylic acid and derivatives.

In the context of the present invention the term (meth)acrylate includes both the acrylate and the methacrylate.

The crosslinkable resins are typically hardened (cured) by adding a radical source, such as a peroxide, a hydroperoxide, a percarbonate or a azo-compound and applying heat.

Depending on the system catalysts such as Cobald compounds, Cupper compounds, Amine compounds are added as accelerator. The temperature is preferably between 10° C and 160° C, more preferred between 40° C and 140° C. It is however also possible to cure these resins by adding a photoinitiator and applying ultraviolet radiation.

When unsaturated acrylic acid or methacrylic acid derivatives, having only one unsaturated bond are used as monomers, they are also polymerized by adding a radical source, as mentioned above. The resulting polymers in this case are, however, not crosslinked but essentially linear and remain thermoplastic.

Photoinitiators suitable for use in the instant invention are in principle any compounds and mixtures that form one or more free radicals when irradiated with electromagnetic waves. These include initiator systems consisting of a plurality of initiators and systems that function independently of one another or synergistically. In addition to coinitiators, for example amines, thiols, borates, enolates, phosphines, carboxylates and imidazoles, it is also possible to use sensitisers, for example acridines, xanthenes, thiazenes, coumarins, thioxanthones, triazines and dyes. A description of such compounds and initiator systems can be found e.g. in Crivello J.V., Dietliker K.K., (1999): Chemistry & Technology of UV & EB Formulation for Coatings, Inks & Paints, and in Bradley G. (ed.) Vol. 3: Photoinitiators for Free Radical and Cationic Polymerisation 2nd Edition, John Wiley & Son Ltd.

The thermoplastic or crosslinkable polymer composition may further contain fillers and reinforcing agents, for example calcium carbonate, marble, dolomite, silicates, quartz, cristobalite, glass fibres, glass beads, asbestos, talc, kaolin, mica, wollastonite, barium sulfate, metal oxides and hydroxides, carbon black, graphite, wood flour and flours or fibers of other natural products, synthetic fibers.

Further additives are, for example plasticisers, lubricants, emulsifiers, pigments, rheology additives, catalysts, flow-control agents, optical brighteners, flameproofing agents, antistatic agents and blowing agents.

The antimicrobial compounds of the present invention are known and mostly items of commerce.

Preferred is a composition comprising a crosslinkable resin, component a1) or a or polymerizable monomer, component a2) or a mixture thereof.

Particularly preferred is a composition wherein the crosslinkable resin, component a1) is a crosslinkable acrylic or methacrylic resin or an unsaturated polyester resin and the polymerizable monomer is an acrylic acid ester or methacrylic acid ester.

In many cases the unsaturated polyester resin contains styrene. The amount of styrene may be up to 50% by weight of styrene, based on the total formulation.

Preferred is a composition wherein the the antimicrobial compound is 2-phenyl phenol, 2,4,4'-trichloro-2'-hydroxydiphenylether, 4,4'-dichloro-2-hydroxydiphenylether, AgCl, Silver-Zeolite, Silver-Glass, Silver-Zirkonate, Silver-apatite, thiabendazole, tebuconazole, 1 H-Benzimidazol-2-ylcarbamic acid methyl ester.

Particularly preferred is a composition wherein the antimicrobial compound is 2,4,4'-trichloro-2'-hydroxydiphenylether or 4,4'-dichloro-2-hydroxydiphenylether.

Typically the UV-absorber is a hydroxybenzophenone of formula I 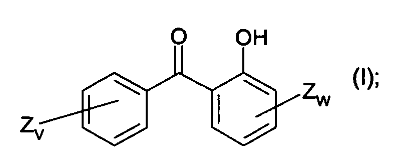 the 2-hydroxyphenylbenzotriazole is of formula IIa, IIb or IIc 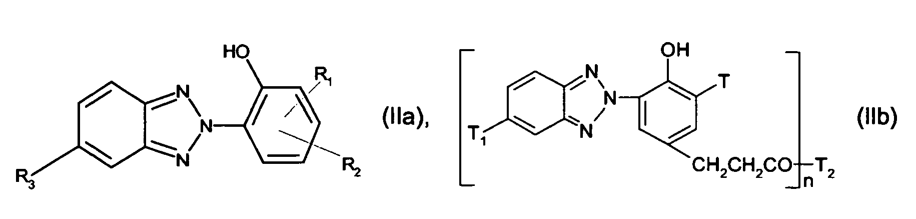 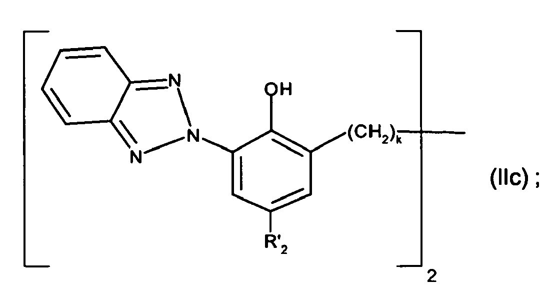 the 2-hydroxyphenyltriazine is of formula III 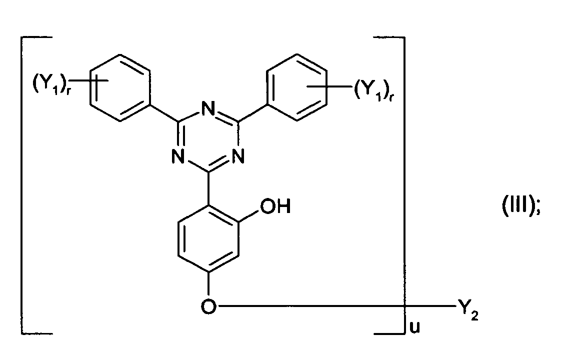 and the oxanilide is of formula (IV) 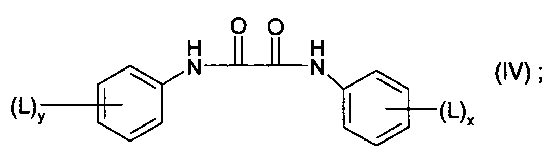 wherein

in the compounds of the formula (I) v is an integer from 1 to 3 and w is 1 or 2 and the substituents Z independently of one another are hydrogen, halogen, hydroxyl or alkoxy having 1 to 12 carbon atoms;
in the compounds of the formula (IIa),
R₁ is hydrogen, alkyl having 1 to 24 carbon atoms, phenylalkyl having 1 to 4 carbon atoms in the alkyl moiety, cycloalkyl having 5 to 8 carbon atoms or a radical of the formula 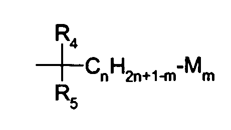 in which
R₄ and R₅ independently of one another are alkyl having in each case 1 to 5 carbon atoms, or R₄, together with the radical CₙH₂ₙ₊₁₋ₘ, forms a cycloalkyl radical having 5 to 12 carbon atoms,
m is 1 or 2, n is an integer from 2 to 20 and
M is a radical of the formula -COOR₆ in which
R₆ is hydrogen, alkyl having 1 to 12 carbon atoms, alkoxyalkyl having in each case 1 to 20 carbon atoms in the alkyl moiety and in the alkoxy moiety or phenylalkyl having 1 to 4 carbon atoms in the alkyl moiety,
R₂ is hydrogen, halogen, alkyl having 1 to 18 carbon atoms, and phenylalkyl having 1 to 4 carbon atoms in the alkyl moiety, and
R₃ is hydrogen, chlorine, alkyl or alkoxy having in each case 1 to 4 carbon atoms or -COOR₆ in which R₆ is as defined above, at least one of the radicals R₁ and R₂ being other than hydrogen;
in the compounds of the formula (IIb)
T is hydrogen or alkyl having 1 to 6 carbon atoms,
T₁ is hydrogen, chlorine or alkyl or alkoxy having in each case 1 to 4 carbon atoms,
n is 1 or 2 and,
if n is 1,
T₂ is chlorine or a radical of the formula -OT₃ or 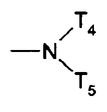 and,
if n is 2, T₂ is a radical of the formula 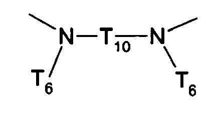 or -O-T₉-O-; in which
T₃ is hydrogen, alkyl which has 1 to 18 carbon atoms and is unsubstituted or substituted by 1 to 3 hydroxyl groups or by -OCOT₆, alkyl which has 3 to 18 carbon atoms, is interrupted once or several times by -O- or -NT₆- and is unsubstituted or substituted by hydroxyl or -OCOT₆, Cycloalkyl which has 5 to 12 carbon atoms and is unsubstituted or substituted by hydroxyl and/or alkyl having 1 to 4 carbon atoms, alkenyl which has 2 to 18 carbon atoms and is unsubstituted or substituted by hydroxyl, phenylalkyl having 1 to 4 carbon atoms in the alkyl
moiety, or a radical of the formula -CH₂CH(OH)-T₇ or 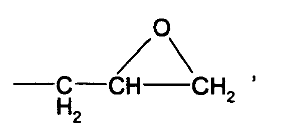 T₄ and T₅ independently of one another are hydrogen, alkyl having 1 to 18 carbon atoms, alkyl which has 3 to 18 carbon atoms and is interrupted once or several times by -O- or
-NT₆-, cycloalkyl having 5 to 12 carbon atoms, phenyl, phenyl which is substituted by alkyl having 1 to 4 carbon atoms, alkenyl having 3 to 8 carbon atoms, phenylalkyl having 1 to 4 carbon atoms in the alkyl moiety or hydroxyalkyl having 2 to 4 carbon atoms,
T₆ is hydrogen, alkyl having 1 to 18 carbon atoms, Cycloalkyl having 5 to 12 carbon atoms, alkenyl having 3 to 8 carbon atoms, phenyl, phenyl which is substituted by alkyl having 1 to 4 carbon atoms, phenylalkyl having 1 to 4 carbon atoms in the alkyl moiety,
T₇ is hydrogen, alkyl having 1 to 18 carbon atoms, phenyl which is unsubstituted or substituted by hydroxyl, phenylalkyl having 1 to 4 carbon atoms in the alkyl moiety, or - CH₂OT₈,
T₈ is alkyl having 1 to 18 carbon atoms, alkenyl having 3 to 8 carbon atoms, cycloalkyl having 5 to 10 carbon atoms, phenyl, phenyl which is substituted by alkyl having 1 to 4 carbon atoms, or phenylalkyl having 1 to 4 carbon atoms in the alkyl moiety,
T₉ is alkylene having 2 to 8 carbon atoms, alkenylene having 4 to 8 carbon atoms, alkynylene having 4 carbon atoms, cyclohexylene, alkylene which has 2 to 8 carbon atoms and is interrupted once or several times by -O-, or a radical of the formula - CH₂CH(OH)CH₂OT₁₁OCH₂CH(OH)CH₂- or -CH₂-C(CH₂OH)₂-CH₂-,
T₁₀ is alkylene which has 2 to 20 carbon atoms and can be interrupted once or several times by -O-, or cyclohexylene,
T₁₁ is alkylene having 2 to 8 carbon atoms, alkylene which has 2 to 18 carbon atoms and is interrupted once or several times by -O-, 1,3-cyclohexylene, 1,4-cyclohexylene, 1,3-phenylene or 1,4-phenylene, or
T₁₀ and T₆, together with the two nitrogen atoms, are a piperazine ring;
in the compounds of formula (IIc) R'₂ is C₁-C₁₂alkyl and k is a number from 1 to 4;
in the compounds of the formula (III) u is 1 or 2 and r is an integer from 1 to 3, the substituents
Y₁ independently of one another are hydrogen, hydroxyl, phenyl or halogen, halogenomethyl, alkyl having 1 to 12 carbon atoms, alkoxy having 1 to 18 carbon atoms, alkoxy having 1 to 18 carbon atoms which is substituted by a group -COO(C₁-C₁₈alkyl); if u is 1,
Y₂ is alkyl having 1 to 18 carbon atoms, phenyl which is unsubstituted or substituted by hydroxyl, halogen, alkyl or alkoxy having 1 to 18 carbon atoms; alkyl which has 1 to 12 carbon atoms and is substituted by -COOH, -COOY₈, -CONH₂, - CONHY₉, -CONY₉Y₁₀, -NH₂, -NHY₉, -NY₉Y₁₀, -NHCOY₁₁, -CN and/or -OCOY₁₁; alkyl which has 4 to 20 carbon atoms, is interrupted by one or more oxygen atoms and is unsubstituted or substituted by hydroxyl or alkoxy having 1 to 12 carbon atoms, alkenyl having 3 to 6 carbon atoms, glycidyl, cyclohexyl which is unsubstituted or substituted by hydroxyl, alkyl having 1 to 4 carbon atoms and/or -OCOY₁₁, phenylalkyl which has 1 to 5 carbon atoms in the alkyl moiety and is unsubstituted or substituted by hydroxyl, chlorine and/or methyl, -COY₁₂ or -SO₂Y₁₃, or, if u is 2,
Y₂ is alkylene having 2 to 16 carbon atoms, alkenylene having 4 to 12 carbon atoms, xylylene, alkylene which has 3 to 20 carbon atoms, is interrupted by one or more -O- atoms and/or is substituted by hydroxyl, -CH₂CH(OH)CH₂-O-Y₁₅-OCH₂CH(OH)CH₂, -CO-Y₁₆-CO-, - CO-NH-Y₁₇-NH-CO- or -(CH₂)ₘ-CO₂-Y₁₈-OCO-(CH₂)ₘ, in which m is 1, 2 or 3,
Y₈ is alkyl having 1 to 18 carbon atoms, alkenyl having 3 to 18 carbon atoms, alkyl which has 3 to 20 carbon atoms, is interrupted by one or more oxygen or sulfur atoms or -NT₆- and/or is substituted by hydroxyl, alkyl which has 1 to 4 carbon atoms and is substituted by - P(O)(OY₁₄)₂, -NY₉Y₁₀ or -OCOY₁₁ and/or hydroxyl, alkenyl having 3 to 18 carbon atoms, glycidyl, or phenylalkyl having 1 to 5 carbon atoms in the alkyl moiety,
Y₉ and Y₁₀ independently of one another are alkyl having 1 to 12 carbon atoms, alkoxyalkyl having 3 to 12 carbon atoms, dialkylaminoalkyl having 4 to 16 carbon atoms or cyclohexyl having 5 to 12 carbon atoms, or Y₉ and Y₁₀ together are alkylene, oxaalkylene or azaalkylene having in each case 3 to 9 carbon atoms,
Y₁₁ is alkyl having 1 to 18 carbon atoms, alkenyl having 2 to 18 carbon atoms or phenyl,
Y₁₂ is alkyl having 1 to 18 carbon atoms, alkenyl having 2 to 18 carbon atoms, phenyl, alkoxy having 1 to 12 carbon atoms, phenoxy, alkylamino having 1 to 12 carbon atoms or phenylamino,
Y₁₃ is alkyl having 1 to 18 carbon atoms, phenyl or alkylphenyl having 1 to 8 carbon atoms in the alkyl radical,
Y₁₄ is alkyl having 1 to 12 carbon atoms or phenyl,
Y₁₅ is alkylene having 2 to 10 carbon atoms, phenylene or a group -phenylene-M-phenylene-in which M is -O-, -S-, -SO₂-, -CH₂- or -C(CH₃)₂-,
Y₁₆ is alkylene, oxaalkylene or thiaalkylene having in each case 2 to 10 carbon atoms, phenylene or alkenylene having 2 to 6 carbon atoms,
Y₁₇ is alkylene having 2 to 10 carbon atoms, phenylene or alkylphenylene having 1 to 11 carbon atoms in the alkyl moiety, and
Y₁₈ is alkylene having 2 to 10 carbon atoms or alkylene which has 4 to 20 carbon atoms and is interrupted once or several times by oxygen; in the compounds of the formula (IV) x is an integer from 1 to 3 and the substituents L independently of one another are hydrogen, alkyl, alkoxy or alkylthio having in each case 1 to 22 carbon atoms, phenoxy or phenylthio.

C₁-C₁₈alkyl may be linear or branched. Examples of alkyl having up to 18 carbon atoms are methyl, ethyl, propyl, isopropyl, n-butyl, sec-butyl, isobutyl, tert-butyl, 2-ethylbutyl, n-pentyl, isopentyl, 1-methylpentyl, 1,3-dimethylbutyl, n-hexyl, 1-methylhexyl, n-heptyl, isoheptyl, 1,1,3,3-tetramethylbutyl, 1-methylheptyl, 3-methylheptyl, n-octyl, 2-ethylhexyl, 1,1,3-trimethyl-hexyl, 1,1,3,3-tetramethylpentyl, nonyl, decyl, undecyl, 1-methylundecyl, dodecyl, 1,1,3,3,5,5-hexamethylhexyl, tridecyl, tetradecyl, pentadecyl, hexadecyl, heptadecyl and octadecyl.

In the compounds of the formula (IIa) R₁ can be hydrogen or alkyl having 1 to 24 carbon atoms, such as methyl, ethyl, propyl, butyl, hexyl, octyl, nonyl, dodecyl, tetradecyl, hexadecyl, octadecyl, nonadecyl and eicosyl and also corresponding branched isomers. Furthermore, in addition to phenylalkyl having 1 to 4 carbon atoms in the alkyl moiety, for example benzyl, R₁ can also be cycloalkyl having 5 to 8 carbon atoms, for example
cyclopentyl, cyclohexyl and cyclooctyl, or a radical of the formula 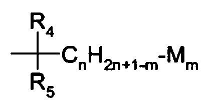 in which R₄ and R₅ independently of one another are alkyl having in each case 1 to 5 carbon atoms, in particular methyl, or R₄, together with the CₙH₂ₙ₊₁₋ₘ radical, forms a cycloalkyl radical having 5 to 12 carbon atoms, for example cyclohexyl, cyclooctyl and cyclodecyl. M is a radical of the formula -COOR₆ in which R₆ is not only hydrogen but also alkyl having 1 to 12 carbon atoms or alkoxyalkyl having 1 to 20 carbon atoms in each of the alkyl and alkoxy moieties. Suitable alkyl radicals R₆ are those enumerated for R₁. Examples of suitable alkoxyalkyl groups are -C₂H₄OC₂H₅, -C₂H₄OC₈H₁₇ and -C₄H₈OC₄H₉. As phenylalkyl having 1 to 4 carbon atoms, R₆ is, for example, benzyl, cumyl, α-methylbenzyl or phenylbutyl.

In addition to hydrogen and halogen, for example chlorine and bromine, R₂ can also be alkyl having 1 to 18 carbon atoms. Examples of such alkyl radicals are indicated in the definitions of R₁. R₂ can also be phenylalkyl having 1 to 4 carbon atoms in the alkyl moiety, for example benzyl, a-methylbenzyl and cumyl.

Halogen as a substituent means in all cases fluorine, chlorine, bromine or iodine, preferably chlorine or bromine and more preferably chlorine.

At least one of the radicals R₁ and R₂ must be other than hydrogen.

In addition to hydrogen or chlorine, R₃ is also alkyl or alkoxy having in each case 1 to 4 carbon atoms, for example methyl, butyl, methoxy and ethoxy, and also -COOR₆.

In the compounds of the formula (IIb) T is hydrogen or alkyl having 1 to 6 carbon atoms, such as methyl and butyl, T₁ is not only hydrogen or chlorine, but also alkyl or alkoxy having in each case 1 to 4 carbon atoms, for example methyl, methoxy and butoxy, and, if n is 1, T₂ is chlorine or a radical of the formula -OT₃ or -NT₄T₅. T₃ is here hydrogen or alkyl having 1 to 18 carbon atoms (cf. the definition of R₁). These alkyl radicals can be substituted by 1 to 3 hydroxyl groups or by a radical -OCOT₆. Furthermore, T₃ can be alkyl having 3 to 18 carbon atoms (cf. the definition of R₁) which is interrupted once or several times by -O- or -NT₆- and is unsubstituted or substituted by hydroxyl or -OCOT₆. Examples of T₃ as cycloalkyl are cyclopentyl, cyclohexyl or cyclooctyl. T₃ can also be alkenyl having 2 to 18 carbon atoms. Suitable alkenyl radicals are derived from the alkyl radicals enumerated in the definitions of R₁. These alkenyl radicals can be substituted by hydroxyl. Examples of T₃ as phenylalkyl are benzyl, phenylethyl, cumyl, α-methylbenzyl or benzyl. T₃ can also be a radical of the formula

-CH₂CH(OH)-T₇ or

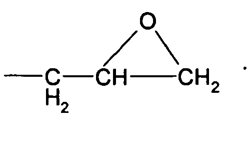

Like T₃, T₄ and T₅ can, independently of one another, be not only hydrogen but also alkyl having 1 to 18 carbon atoms or alkyl which has 3 to 18 carbon atoms and is interrupted once or several times by -O- or -NT₆-. T₄ and T₅ can also be cycloalkyl having 5 to 12 carbon atoms, for example cyclopentyl, cyclohexyl and cyclooctyl. Examples of T₄ and T₅ as alkenyl groups can be found in the illustrations of T₃. Examples of T₄ and T₅ as phenylalkyl having 1 to 4 carbon atoms in the alkyl moiety are benzyl or phenylbutyl. Finally, these substituents can also be hydroxyalkyl having 1 to 3 carbon atoms.

If n is 2, T₂ is a divalent radical of the formula 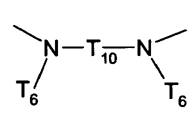 or -O-T₉-O-.

In addition to hydrogen, T₆ (see above also) is alkyl, cycloalkyl, alkenyl, aryl or phenylalkyl; examples of such radicals have already been given above.

In addition to hydrogen and the phenylalkyl radicals and long-chain alkyl radicals mentioned above, T₇ can be phenyl or hydroxyphenyl and also -CH₂OT₈ in which T₈ can be one of the alkyl, alkenyl, cycloalkyl, aryl or phenylalkyl radicals enumerated.

The divalent radical T₉ can be alkylene having 2 to 8 carbon atoms, and such radicals can also be branched. This also applies to the alkenylene and alkynylene radicals T₉. As well as cyclohexylene, T₉ can also be a radical of the formula - CH₂CH(OH)CH₂OT₁₁OCH₂CH(OH)CH₂- or -CH₂-C(CH₂OH)₂-CH₂-.

T₁₀ is a divalent radical and, in addition to cyclohexylene, is also alkylene which has 2 to 20 carbon atoms and which can be interrupted once or several times by -O-. Suitable alkylene radicals are derived from the alkyl radicals mentioned in the definitions of R₁.

T₁₁ is also an alkylene radical. It contains 2 to 8 carbon atoms or, if it is interrupted once or several times by -O-, 4 to 10 carbon atoms. T₁₁ is also 1,3-cyclohexylene, 1,4-cyclohexylene, 1,3-phenylene or 1,4-phenylene.

Together with the two nitrogen atoms, T₆ and T₁₀ can also be a piperazine ring.

Examples of alkyl, alkoxy, phenylalkyl, alkylene, alkenylene, alkoxyalkyl and cycloalkyl radicals and also alkylthio, oxaalkylene or azoalkylene radicals in the compounds of the formulae (I), (IIa), (IIb), (IIc), (III) and IV) can be deduced from the above statements.

Within the benzotriazole UV-absorbers those according to formula IIa are in general preferred.

The UV absorbers of the formulae (I), (IIa), (IIb), (IIc), (III) and (IV) are known per se and are described, together with their preparation in, for example, WO 96/28431, EP-A-323 408, EP-A-57 160, US 5 736 597 (EP-A-434 608), US-A 4 619 956, DE-A 31 35 810 and GB-A 1 336 391. Preferred meanings of substituents and individual compounds can be deduced from the documents mentioned.

Preferred are compositions wherein the 2-hydroxybenzophenones are the 4-hydroxy, 4-methoxy, 4-octyloxy, 4-decyloxy, 4-dodecyloxy, 4-benzyloxy and 2'-hydroxy-4,4'-dimethoxy derivatives;

the 2-(2'-hydroxyphenyl)benzotriazoles are 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl- 2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(α,α-dimethylbenzyl)-2'-hydroxyphenyl)benzotriazole, 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyl-oxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonyl-ethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; [R-CH₂CH₂-COO-CH₂CH₂-]-₂ where R = 3'-tert-butyl-4'-hydroxy-5'-2H-benzotri-azol-2-ylphenyl, 2-[2'-hydroxy-3'-(α,α-dimethylbenzyl)-5'-(1,1,3,3-tetramethylbutyl)-phenyl]-benzotriazole; 2-[2'-hydroxy-3'-(1,1,3,3-tetramethylbutyl)-5'-(α,α-dimethylbenzyl)-phenyl]benzotriazole;
the 2-(2-hydroxyphenyl)-1,3,5-triazines are 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxy-phenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxy-propoxy)phenyl]-4,6-bis(2,4-dimethyl)-1,3,5-triazine, 2-[2-hydroxy-4-(2-hydroxy-3-octyloxy-propyloxy)phenyl]-4,6-bis(2,4-dimethyl)-1,3,5-triazine, 2-[4-(dodecyloxy/tridecyloxy-2-hydroxypropoxy)-2-hydroxy-phenyl]-4,6-bis(2,4-dimethylphenyl)-1,3,5-triazine, 2-[2-hydroxy-4-(2-hydroxy-3-dodecyloxy-propoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxy-propoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxypropyloxy]phenyl}-4,6-bis(2,4-dimethylphenyl)-1,3,5-triazine or 2-(2-hydroxy-4-(2-ethylhexyl)oxy)phenyl-4,6-di(4-phenyl)-phenyl-1,3,5-triazine.

In particular preferred hydroxyphenyl triazines are of formulae 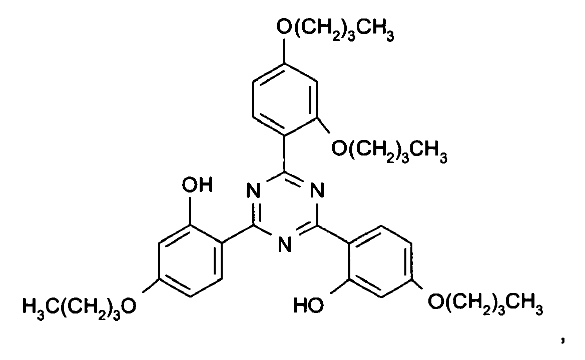 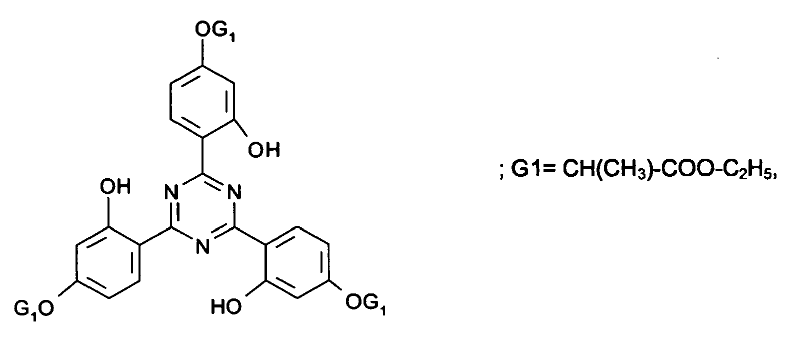 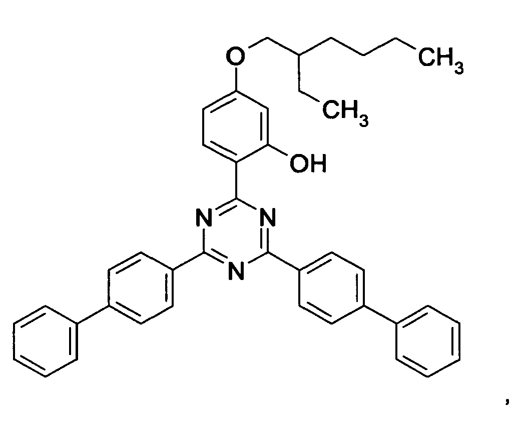 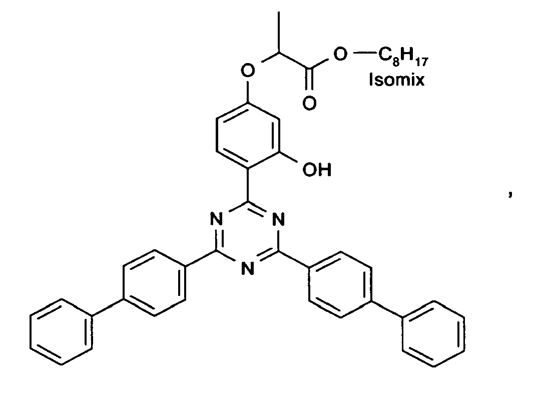 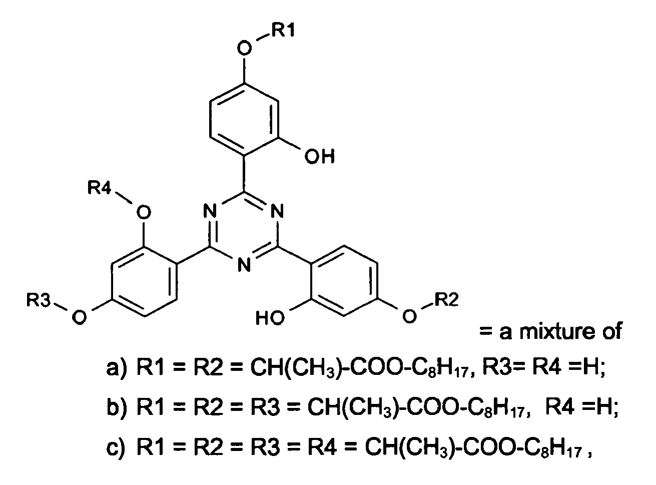 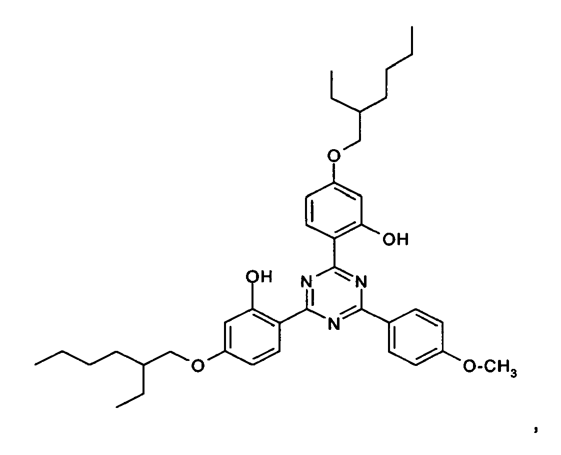 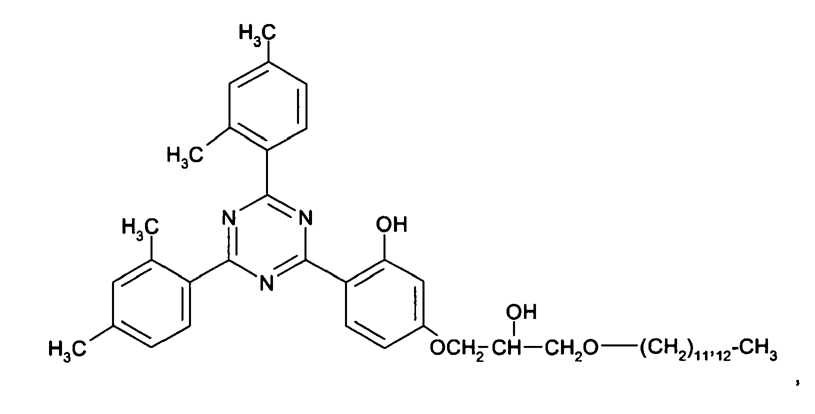 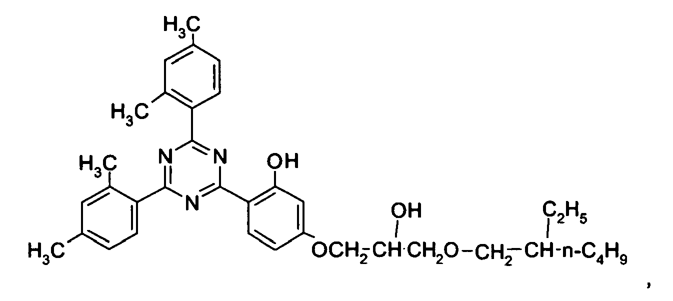 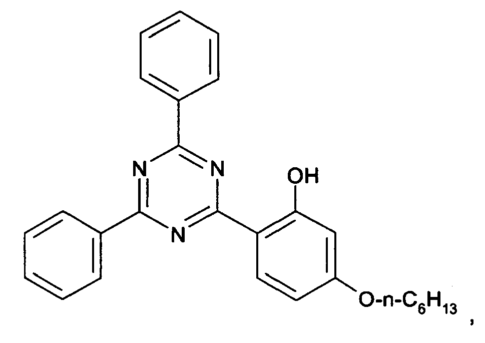 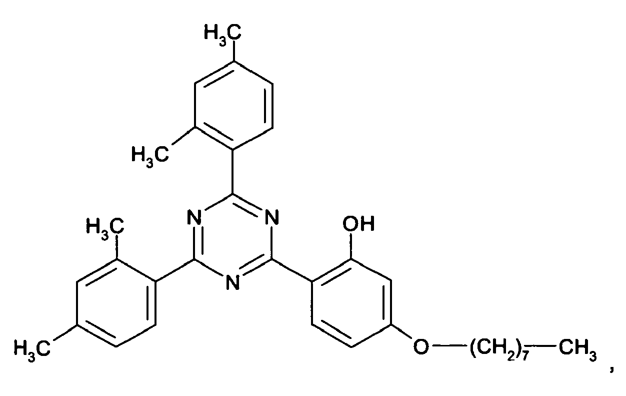 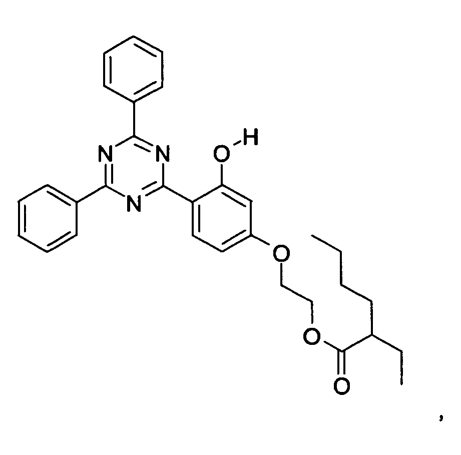 or

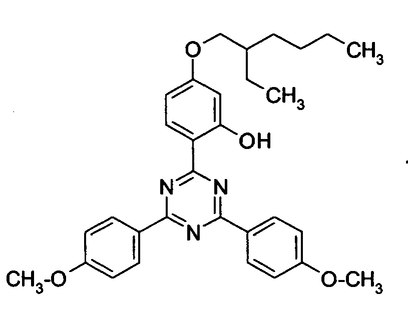

The hydroxyphenyl triazine UV-absorbers are known and partially items of commerce. They can be prepared according to the above documents.

Specific examples for oxamides are for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.

The above mentioned UV-absorbers are largely items of commerce and for example known as Tinuvin® P, 109, 171, 234, 312, 315, 320, 326, 327, 328, 350, 360, 384, 400, 405, 411, 1577 or Chimassorb® 81 from Ciba Specialty Chemicals or Cyasorb® 1164 or 3638 from Cytech Inc. These UV-absorbers and mixtures thereof are especially suitable in the instant invention.

In particular Chimassorb 81, Tinuvin® P, Tinuvin® 312, Tinuvin® 1577 and mixtures thereof are suitable UV-absorbers.

In many cases it may be of advantage to use a combination of UV-absorbers from different classes, such as for example a benzophenone UV-absorber with a benzotriazole UV-absorber, a benzophenone UV-absorber with a hydroxyphenyltriazine UV-absorber or a hydroxyphenyltriazine UV-absorber with a benzotriazole UV-absorber. If such a combination is used, the weight ratio between both UV-absorbers is for example from 1:10 to 10:1, for instance from 1:5 to 5:1, particularly 1:3 to 3:1.

Typically the antimicrobial compound is present in an amount of 0.005% to 5% by weight, based on the weight of the thermoplastic or crosslinkable polymer.

For instance the UV-absorber is present in an amount of 0.01 % to 10% by weight, preferably by 0.1% to 5% by weight, based on the weight of the thermoplastic or crosslinkable polymer.

For example the weight ratio between the UV-absorber and the antimicrobial compound is from 100: 1 to 1:10.

The composition may contain optionally further additives. Examples are given below.

1. Antioxidants

1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example, 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltrideo-1'-yl)phenol and mixtures thereof.

1.2. Alkylthiomethylphenols, for example 2,4-dioctylthiomethyl-6-tert-butylphenol, 2,4-dioctyl-thiomethyl-6-methylphenol, 2,4-dioctylthiomethyl-6-ethylphenol, 2,6-di-dodecylthiomethyl-4-nonylphenol.

1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.

1.4. Tocopherols, for example α-tocopherol, β-tocopherol, γ-tocopherol, δ-tocopherol and mixtures thereof (vitamin E).

1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl)-disulfide.

1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methy-lenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis(3,5-di-tert-butyl-4-hydroxyphenyl)propane, 2,2-bis(5-tert-butyl-4-hydroxy2-methylphenyl)-4-n-dodecylmercaptobutane, 1,1,5,5-tetra-(5-tert-butyl-4-hydroxy-2-methylphenyl)pentane.

1.7. O-, N- and S-benzyl compounds, for example 3,5,3',5'-tetra-tert-butyl-4,4'-dihydroxydi-benzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.

1.8. Hydroxybenzylated malonates, for example dioctadecyl-2,2-bis(3,5-di-tert-butyl-2-hydroxybenzyl)malonate, di-octadecyl-2-(3-tert-butyl-4-hydroxy-5-methylbenzyl)malonate, di-dodecylmercaptoethyl-2,2-bis (3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.

1.9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.

1.10. Triazine compounds, for example 2,4-bis(octylmercapto)-6-(3,5-di-tert-butyl-4-hydroxy-anilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris-(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.

1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.

1.12. Acylaminophenols, for example 4-hydroxylauranilide, 4-hydroxystearanilide, octyl N - (3,5-di-tert-butyl-4-hydroxyphenyl)carbamate.

1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]-undecane.

1.15. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)ox-amide, 3-thiaundecanol, 3-thiapentadecanol, trimethylhexanediol, trimethylolpropane, 4-hydroxymethyl-1-phospha-2,6,7-trioxabicyclo[2.2.2]octane.

1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)ox-amide, 3-thiaundecanol, 3-thiapentadecanol, trimethylhexanediol, trimethylolpropane, 4-hydroxymethyl-1-phospha-2,6,7-trioxabicyclo[2.2.2]octane.

1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hy-drazide, N,N'-bis[2-(3-[3,5-di-tert-butyl-4-hydroxyphenyl]propionyloxy)ethyl]oxamide (Nau-gard^{®}XL-1, supplied by Uniroyal).

1.18. Ascorbic acid (vitamin C)

1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenyl-amine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butyl-aminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylamino-methylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenyl-amines, a mixture of mono- and dialkylated nonyldiphenylamines, a mixture of mono- and dialkylated dodecyldiphenylamines, a mixture of mono- and dialkylated isopropyl/isohexyl-diphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylphenothiazines, a mixture of mono- and dialkylated tert-octyl-phenothiazines, N-allylphenothiazine, N,N,N',N'-tetraphenyl-1,4-diaminobut-2-ene.

2. Further UV absorbers and light stabilizers

2.1. Esters of substituted and unsubstituted benzoic acids, for example 4-tert-butyl-phenyl salicylate, phenyl salicylate, octylphenyl salicylate, dibenzoyl resorcinol, bis(4-tert-butylbenzoyl)resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.

2.2. Acrytates, for example ethyl α-cyano-β,β-diphenylacrylate, isooctyl α-cyano-β,β-diphe-nylacrylate, methyl α-carbomethoxycinnamate, methyl α-cyano-β-methyl-p-methoxycinnamate, butyl α-cyano-β-methyl-p-methoxy-cinnamate, methyl α-carbomethoxy-p-methoxycinnamate, N-(β-carbomethoxy-β-cyanovinyl)-2-methylindoline, neopentyl tetra(α-cyano-β,β-di-phenylacrylate.

2.3. Nickel compounds, for example nickel complexes of 2,2'-thio-bis[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphe-nylundecylketoxime, nickel complexes of 1-phenyl-4-lauroyl-5-hydroxypyrazole, with or without additional ligands.

2.4. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)malonate, 3-n-octyl-7,7,9,9-tetramethyl-1,3,8-triazaspiro[4.5]decane-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)ethane, the condensate of 2-chloro-4,6-di-(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensate of N,N'-bis(2,2,6,6-tetramethyl-4-piperidyl)hexamethylenediamine and 4-cyclohexylamino-2,6-dichloro-1,3,5-triazine, a condensate of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); a condensate of 1,6-hexanediamine and 2,4,6-trichloro-1,3,5-triazine as well as N,N-dibutylamine and 4-butylamino-2,2,6,6-tetramethylpiperidine (CAS Reg. No. [192268-64-7]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro-[4,5]decane and epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, a diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]siloxane, a reaction product of maleic acid anhydride-α-olefin copolymer with 2,2,6,6-tetramethyl-4-ami-nopiperidine or 1,2,2,6,6-pentamethyl-4-aminopiperidine, 2,4-bis[N-(1-cyclohexyloxy-2,2,6,6-tetramethylpiperidine-4-yl)-N-butylamino]-6-(2-hydroxyethyl)amino-1,3,5-triazine, 1-(2-hydroxy-2-methylpropoxy)-4-octadecanoyloxy-2,2,6,6-tetramethylpiperidine, 5-(2-ethylhexanoylr oxymethyl-3,3,5-trimethyl-2-morpholinone, Sanduvor (Clariant; CAS Reg. No. 106917-31-1], 5-(2-ethylhexanoyl)oxymethyl-3,3,5-trimethyl-2-morpholinone, the reaction product of 2,4-bis-[(1-cyclohexyloxy-2,2,6,6-piperidine-4-yl)butylamino]-6-chloro-s-triazine with N,N'-bis(3-aminopropyl)ethylenediamine), 1,3,5-tris(N-cyclohexyl-N-(2,2,6,6-tetramethylpiperazine-3-one-4-yl)amino)-s-triazine, 1,3,5-tris(N-cyclohexyl-N-(1,2,2,6,6-pentamethylpiperazine-3-one-4-yl)-amino)-s-triazine.

3. Metal deactivators, for example N,N'-diphenyloxamide, N-salicylal-N'-salicyloyl hydrazine, N,N'-bis(salicyloyl)hydrazine, N,N'-bis(3,5-di-tert-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyl-oyl)oxalyl dihydrazide, N,N'-bis(salicyloyl)thiopropionyl dihydrazide.

4. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,4-di-cumylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)-pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-methyl-dibenz[d,g]-1,3,2-dioxaphosphocin, 2,2',2"-nitrilo-[triethyltris(3,3',5,5'-tetra-tert-butyl-1,1'-biphenyl-2,2'-diyl)phosphite], 2-ethylhexyl(3,3',5,5'-te-tra-tert-butyl-1,1'-biphenyl-2,2'-diyl)phosphite, 5-butyl-5-ethyl-2-(2,4,6-tri-tert-butylphenoxy)-1,3,2-dioxaphosphirane.

The following phosphites are especially preferred:
Tris(2,4-di-tert-butylphenyl) phosphite (Irgafos^{®}168, Ciba Specialty Chemicals Inc.), tris(nonylphenyl) phosphite,

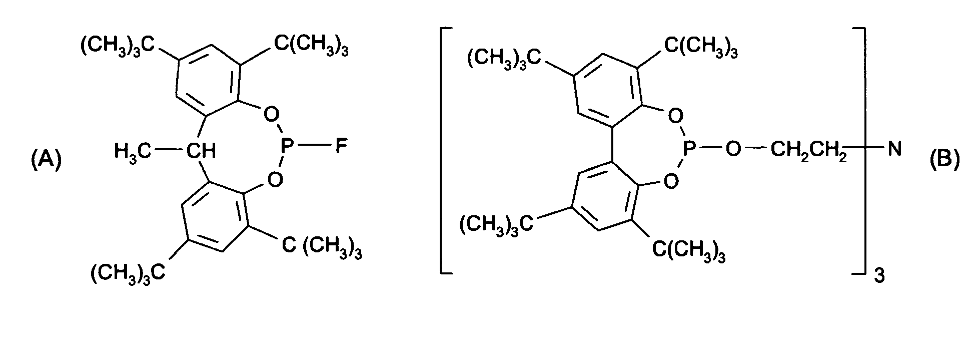

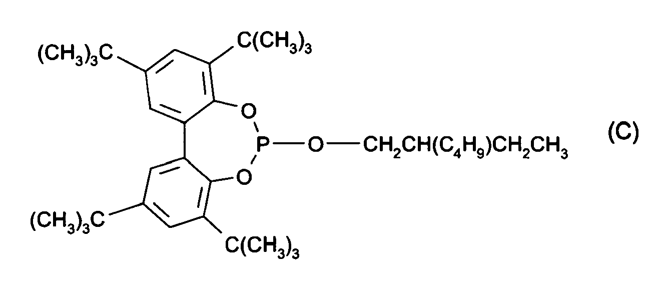

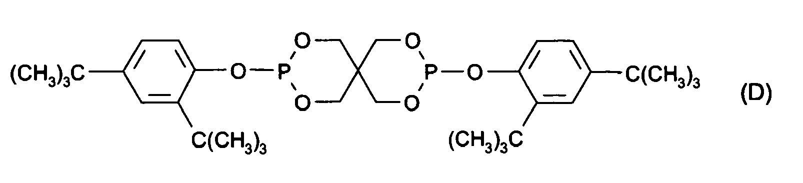

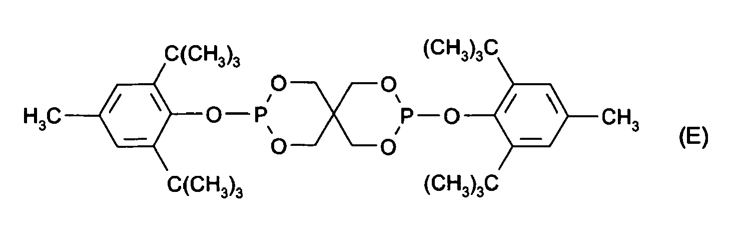

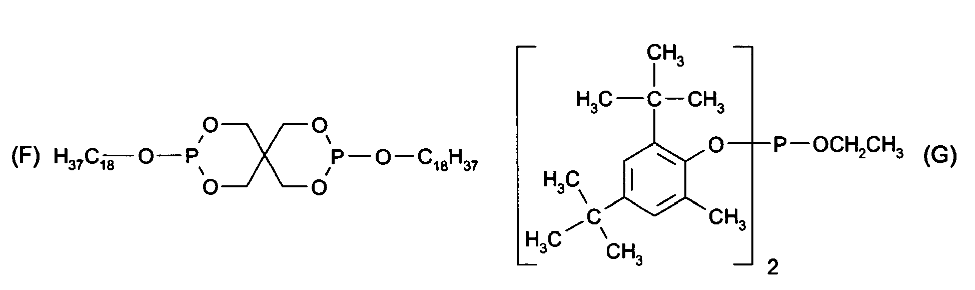

5. Hydroxylamines, for example N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.

6. Nitrones, for example, N-benzyl-alpha-phenylnitrone, N-ethyl-alpha-methylnitrone, N-octyl-alpha-heptylnitrone, N-lauryl-alpha-undecylnitrone, N-tetradecyl-alpha-tridecylnnitrone, N-hexadecyl-alpha-pentadecylnitrone, N-octadecyl-alpha-heptadecylnitrone, N-hexadecyl-alpha-heptadecylnitrone, N-ocatadecyl-alpha-pentadecylnitrone, N-heptadecyl-alpha-heptadecylnitrone, N-octadecyl-alpha-hexadecylnitrone, nitrone derived from N,N-dialkylhydroxylamine derived from hydrogenated tallow amine.

7. Thiosynergists, for example dilauryl thiodipropionate, dimistryl thiodipropionate, distearyl thiodipropionate or distearyl disulfide.

8. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.

9. Polyamide stabilizers, for example copper salts in combination with iodides and/or phosphorus compounds and salts of divalent manganese.

10. Basic co-stabilizers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example calcium stearate, zinc stearate, magnesium behenate, magnesium stearate, sodium ricinoleate and potassium palmitate, antimony pyrocatecholate or zinc pyrocatecholate.

11. Nucleating agents, for example inorganic substances, such as talcum, metal oxides, such as titanium dioxide or magnesium oxide, phosphates, carbonates or sulfates of, preferably, alkaline earth metals; organic compounds, such as mono- or polycarboxylic acids and the salts thereof, e.g. 4-tert-butylbenzoic acid, adipic acid, diphenylacetic acid, sodium succinate or sodium benzoate; polymeric compounds, such as ionic copolymers (ionomers). Especially preferred are 1,3:2,4-bis(3',4'-dimethylbenzylidene)sorbitol, 1,3:2,4-di(paramethyl-dibenzylidene)sorbitol, and 1,3:2,4-di(benzylidene)sorbitol.

12. Benzofuranones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839, EP-A-0591102; EP-A-1291384 or 3-[4-(2-acetoxyethoxy)phenyl]-5,7-di-tert-butylbenzofuran-2-one, 5,7-di-tert-butyl-3-[4-(2-stearoyloxy-ethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butylbenzofuran-2-one, 3-(3,5-dimethyl-4-pivaloyloxyphenyl)-5,7-di-tert-butylbenzofuran-2-one, 3-(3,4-dimethylphenyl)-5,7-di-tert-butylbenzofuran-2-one, 3-(2,3-dimethylphenyl)-5,7-di-tert-butylbenzofuran-2-one, 3-(2-acetyl-5-isooctylphenyl)-5-isooctyl-benzofuran-2-one.

13. Fillers and reinforcing agents, for example calcium carbonate, silicates, glass fibers, glass bulbs, talc, kaolin, quartz, granite, marble, porphyry, cristobalite, limestone, dolomite, mica, barium sulfate, metal oxides and hydroxides, carbon black, graphite, wood flour and flours or fibers of other natural products, synthetic fibers.

14. Other additives, for example plasticizers, lubricants, emulsifiers, pigments, dyes, optical brighteners, rheology additives, catalysts, flow-control agents, slip agents, crosslinking agents, crosslinking boosters, halogen scavengers, smoke inhibitors, flameproofing agents or antistatic agents.

A further aspect of the invention is a process for reducing yellowing upon exposure to actinic radiation of a thermoplastic or crosslinkable polymer composition, which process comprises incorporating into and/or crosslinking or polymerizing
a1) a aosslinkable urea formaldehyde resins, a crosslinkable melamine formaldehyde resin, a crosslinkable melamine phenol formaldehyde resin, a crosslinkable epoxy resin, a crosslinkable polyurethane, a crosslinkable rubber, a crosslinkable acrylic or methacrylic resin or a crosslinkable unsaturated polyester resin; or
a2) a polymerizable monomer which is an acrylic or methacrylic acid derivative; or
a3) a thermoplastic polyester, a thermoplastic polyacrylate or methacrylate, a thermo plastic polyamide, a thermoplastic polystyrene, a thermoplastic halogen containing polymer, a thermoplastic polyacetal or a thermoplastic polyurethane; or
a4) a mixture of components a1) to a3); wherein is incorporated
b) an antimicrobial compound selected from the group consisting of 2-phenyl phenol, 2,4,4'-trichloro-2'-hydroxydiphenylether, 4,4'-dichloro-2-hydroxydiphenylether, 2,2'-methylenbis-(4-chloro-phenol), 4-(2-t-butyl-5-methylphenoxy)-phenol, 3-(4-chlorophenyl)-1-(3,4-dichloro-phenylfurea, 2,4,6-trichlorophenol, AgCl, AgNO₃, Ag₂SO₄, Silver-Zeolite, Silver-Glass, Silver-Zirkonate, Silver-apatite, thiabendazole, tebuconazole, 1 H-benzimidazol-2-ylcarbamic acid methyl ester, 10,10'-oxybis-phenoxyarsine, Zink pyrithione, 2-n-octyl-4-isothiazolin-3-on, n-butyl-1,2-benzisothiazolin-3-one, 4,5-di-chloro-N-n-octyl-isothiazolin-3-one and mixtures thereof; and
c) a UV-absorber selected from the group consisting of hydroxy benzophenones, hydroxyphenyl benzotriazoles, oxalic acid anilides, hydroxyphenyl triazines and mixtures thereof.

Preferences and definitions given for the composition apply also for the process.

The additives of the invention and optional further components may be added to the polymer material individually or mixed with one another. If desired, the individual components can be mixed with one another before incorporation into the polymer for example dissolved in a liquid resin, by dry blending, compaction or in the melt.

The incorporation of the additives of the invention and optional further components into the polymer is carried out by known methods such as dry blending in the form of a powder, or wet mixing in the form of solutions, dispersions or suspensions for example in an inert solvent, water or oil. The additives of the invention and optional further additives may be incorporated, for example, before or after molding or also by applying the dissolved or dispersed additive or additive mixture to the polymer material, with or without subsequent evaporation of the solvent or the suspension/dispersion agent. They may be added directly into the processing apparatus (e.g. extruders, internal mixers, etc), e.g. as a dry mixture or powder or as solution or dispersion or suspension or melt.

The incorporation can be carried out in any heatable container equipped with a stirrer, e.g. in a closed apparatus such as a kneader, mixer or stirred vessel. For the thermoplastic polymers the incorporation is preferably carried out in an extruder or in a kneader. It is immaterial whether processing takes place in an inert atmosphere or in the presence of oxygen.

The addition of the additive or additive blend to the thermoplastic polymer can be carried out in all customary mixing machines in which the thermoplastic polymer is melted and mixed with the additives. Suitable machines are known to those skilled in the art. They are predominantly mixers, roll mills, calendars, kneaders and extruders.
The process is preferably carried out in an extruder by introducing the additive during processing.

Particularly preferred processing machines are single-screw extruders, contrarotating and corotating twin-screw extruders, planetary-gear extruders, ring extruders or cokneaders. It is also possible to use processing machines provided with at least one gas removal compartment to which a vacuum can be applied.

Suitable extruders and kneaders are described, for example, in Handbuch der Kunststoffex-trusion, Vol. 1 Grundlagen, Editors F. Hensen, W. Knappe, H. Potente, 1989, pp. 3-7, ISBN:3-446-14339-4 *(*Vol. 2 Extrusionsanlagen 1986, ISBN 3-446-14329-7*).*
For example, the screw length is 1 - 60 screw diameters, preferably 20-48 screw diameters. The rotational speed of the screw is preferably 1 - 800 rotations per minute (rpm), very particularly preferably 25 - 400 rpm.
The maximum throughput is dependent on the screw diameter, the rotational speed and the driving force. The process of the present invention can also be carried out at a level lower than maximum throughput by varying the parameters mentioned or employing weighing machines delivering dosage amounts.
If a plurality of components is added, these can be premixed or added individually.

The additives of the invention and optional further additives can also be added to the polymer in the form of a masterbatch ("concentrate") which contains the components in a concentration of, for example, about 1 % to about 40% and preferably 2 % to about 20 % by weight incorporated in a polymer. The polymer must not be necessarily of identical structure than the polymer where the additives are added finally. In such operations, the polymer can be used in the form of powder, granules, solutions, suspensions or in the form of latices.

Incorporation can take place prior to or during the shaping operation, or by applying the dissolved or dispersed compound to the polymer, with or without subsequent evaporation of the solvent. In the case of elastomers, these can also be stabilized as latices.

The polymeric materials containing the additives of the invention described herein can be used for the production of moldings, rotomolded articles, injection molded articles, blow molded articles, compression molded articles, vibro-compression molded articles, cast sheets, thermoformed articles, single and multilayer articles, films, tapes, mono-filaments, fibers, nonwovens, profiles, adhesives or putties, surface coatings and the like.

Typical applications are applications with intended out door use such as container, out door furniture, cladding, roofing, wood filled plastic, plastic lumber, swimming pools and applications which are potentially stored or handled out door before finally used indoor, such as containers, coated fabrics, paper laminates, toilet seats, table tops, artificial marble, tiles, sinks and bath tubs.

The following examples illustrate the invention.

### Example 1: Polymethylmethacrylate (PMMA)

70 g of fresh distilled methyl-methacrylate is mixed with 0.7 g lauroylperoxide, 2,4,4'-trichloro-2'-hydroxydiphenylether and UV absorber (see Table 1).
This mixture is filled into a cuvette and heated
a) 6 h at 60°C water bath
b) 15h at 60°C oven
c) 3 h at 120°C oven

**Table 1:**

| | Methacrylate | Laurolyperoxide | Trichloro-2'-hydroxydiphenylether | Tinuvin® P |
|---|---|---|---|---|
| Comparative Example 1 | 70 g | 0.1% | 0 | 0 |
| Comparative Example 2 | 70 g | 0.1% | 0.5% | 0 |
| Example 3 | 70 g | 0.1 % | 0.5% | 0.3% |

The plaques are subjected to accelerated weathering Ci65 Xenon Arc Weather-Ometer at 63°C, dry.

Yellowness Index and Delta E values according to DIN 6174 are summarized in Tables 2, 3

**Table 2: Yellowness Index after weathering**

| | 0h | 465 h | 1041 h | 2092 h | 4035 h | 7000 h | 12000 h |
|---|---|---|---|---|---|---|---|
| Comparative Example 1 | - 1.2 | - 1.5 | 1.1 | 0.2 | - 0.3 | - 0.2 | 1.7 |
| Comparative Example 2 | - 0.7 | 40.2 | 42.1 | 49.3 | 58.7 | 60.5 | 64.4 |
| Example 3 | 0.2 | 0.7 | 2.7 | 3.0 | 3.1 | 2.9 | 4.7 |

**Table 3: Delta E after weathering**

| | 0h | 465 h | 1041 h | 2092 h | 4035 h | 7000 h | 12000 h |
|---|---|---|---|---|---|---|---|
| Comparative Example 1 | 0 | 1.2 | 1.3 | 0.8 | 0.5 | 0.9 | 4.4 |
| Comparative Example 2 | 0 | 26.2 | 25.2 | 29.2 | 34.7 | 35.2 | 37.2 |
| Example 3 | 0 | 1.7 | 2.4 | 1.9 | 1.9 | 1.8 | 5 |

It can be seen that the formulation containing Trichloro-2'-hydroxydiphenylether + UV absorber provides superior resistance to discoloration upon accelerated weathering

### Example 2: Unsaturated Polyester (UPES)

500 g of unsaturated polyester resin (Palatal P4, BASF) is mixed with 2 g Lucidol paste (50% Benzolyperoxide in Dioctylphthalate, Elf Atochem) Trichloro-2'-hydroxydiphenylether and UV absorber (see table 4).

This mixture is filled into a cuvette and heated
a) 3 h at 70°C
b) 2 h at 105°C

The plaques are subjected to accelerated weathering Ci65 Xenon Arc Weather-Ometer at 63°C, dry.

**Table 4**

| | Trichloro-2'-hydroxydiphenylether | Chimassorb® 81 | Tinuvin® 1577 | Tinuvin® 312 |
|---|---|---|---|---|
| Example 4 | 0 | 0 | 0 | 0 |
| Example 5 | 0.5% | 0 | 0 | 0 |
| Example 6 | 0.5% | 0.3% | 0 | 0 |
| Example 7 | 0.5% | 0 | 0.3% | 0 |
| Example 8 | 0.5% | 0 | 0 | 0.3% |
| Example 9 | 0.5% | 0.24% | 0.06 % | 0 |
| Example 10 | 0.5% | 0.15 % | 0 | 0.15 % |

The formulation 5 showed strong discoloration after 500 h accelerated weathering.

The formulations containing Trichloro-2'-hydroxydiphenylether + UV absorber provide superior resistance to discoloration upon accelerated weathering.

Chimassorb 81 is a benzophenone type UV absorber from Ciba Specialty Chemicals.
Tinuvin 1577 is a triazine type UV absorber from Ciba Specialty Chemicals.
Tinuvin 312 is a benzotriazole UV absorber from Ciba Specialty Chemicals.

## Claims

1. A composition comprising a1) a crosslinkable urea formaldehyde resins, a crosslinkable melamine formaldehyde resin, a crosslinkable melamine phenol formaldehyde resin, a crosslinkable epoxy resin, a crosslinkable polyurethane, a crosslinkable rubber, a crosslinkable acrylic or methacrylic resin or a crosslinkable unsaturated polyester resin; or a2) a polymerizable monomer which is an acrylic or methacrylic acid derivative; or a3) a thermoplastic saturated polyester, a thermoplastic polyacrylate or methacrylate, a thermoplastic polyamide, a thermoplastic polystyrene, a thermoplastic halogen containing polymer, a thermoplastic polyacetal or a thermoplastic polyurethane; or a4) a mixture of components a1) to a3); wherein is incorporated b) an antimicrobial compound selected from the group consisting of 2-phenyl phenol, 2,4,4'-trichloro-2'-hydroxydiphenylether, 4,4'-dichloro-2-hydroxydiphenylether, 2,2'-methylenbis-(4-chloro-phenol), 4-(2-t-butyl-5-methylphenoxy)-phenol, 3-(4-chlorophenyl)-1-(3,4-dichloro-phenyl)-urea, 2,4,6-trichlorophenol, AgCl, AgNO₃, Ag₂SO₄, Silver-Zeolite, Silver-Glass, Silver-Zirkonate, Silver-Apatite, thiabendazole, tebuconazole, 1 H-benzimidazol-2-ylcarbamic acid methyl ester, 10,10'-oxybis-phenoxyarsine, Zink pyrithione, 2-n-octyl-4-isothiazolin-3-on, n-butyl-1,2-benzisothiazolin-3-one, 4,5-di-chloro-N-n-octyl-isothiazolin-3-one and mixtures thereof; c) a UV-absorber selected from the group consisting of hydroxy benzophenones, hydroxyphenyl benzotriazoles, oxalic acid anilides, hydroxyphenyl triazines and mixtures thereof.

2. A composition according to claim 1 comprising a crosslinkable resin, component a1) or a or polymerizable monomer, component a2) or a mixture thereof.

3. A composition according to claim 1 wherein the crosslinkable resin, component a1) is a crosslinkable acrylic or methacrylic resin or an unsaturated polyester resin and the polymerizable monomer is an acrylic acid ester or methacrylic acid ester.

4. A composition according to claim 1 wherein the the antimicrobial compound is 2-phenyl phenol, 2,4,4'-trichloro-2'-hydroxydiphenylether, 4,4'-dichloro-2-hydroxydiphenylether, AgCl, Silver-Zeolite, Silver-Glass, Silver-Zirkonate, Silver-apatite, thiabendazole, tebuconazole, 1 H-benzimidazol-2-ylcarbamic acid methyl ester

5. A composition according to claim 4 wherein the antimicrobial compound is 2,4,4'-trichloro-2'-hydroxydiphenylether or 4,4'-dichloro-2-hydroxydiphenylether.

6. A composition according to claim 1 wherein the UV-absorber is a hydroxybenzophenone of formula I 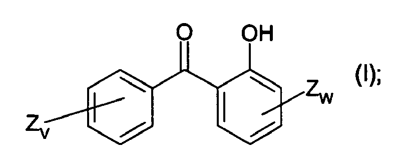 the 2-hydroxyphenylbenzotriazole is of formula IIa, IIb or IIc 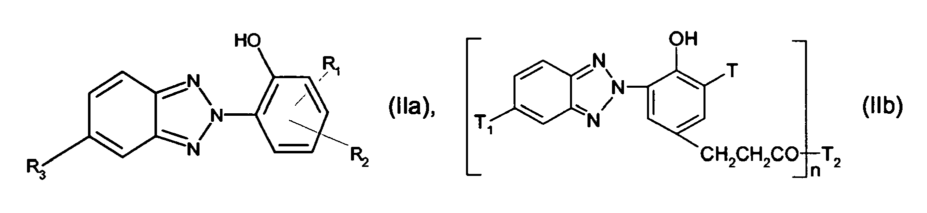 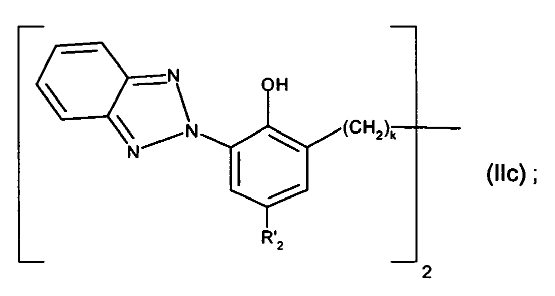 the 2-hydroxyphenyltriazine is of formula III 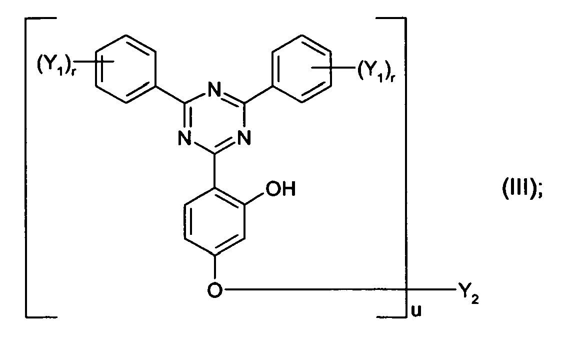 and the oxanilide is of formula (IV) 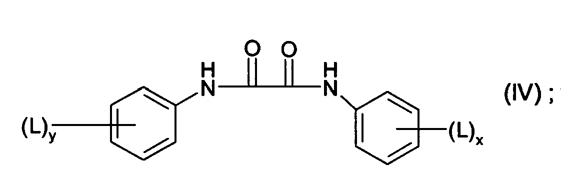 wherein
in the compounds of the formula (I) v is an integer from 1 to 3 and w is 1 or 2 and the substituents Z independently of one another are hydrogen, halogen, hydroxyl or alkoxy having 1 to 12 carbon atoms; in the compounds of the formula (IIa),
R₁ is hydrogen, alkyl having 1 to 24 carbon atoms, phenylalkyl having 1 to 4 carbon atoms in the alkyl moiety, cycloalkyl having 5 to 8 carbon atoms or a radical of the formula 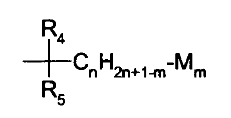 in which
R₄ and R₅ independently of one another are alkyl having in each case 1 to 5 carbon atoms, or R₄, together with the radical CₙH₂ₙ₊₁₋ₘ, forms a cycloalkyl radical having 5 to 12 carbon atoms,
m is 1 or 2, n is an integer from 2 to 20 and
M is a radical of the formula -COOR₆ in which
R₆ is hydrogen, alkyl having 1 to 12 carbon atoms, alkoxyalkyl having in each case 1 to 20 carbon atoms in the alkyl moiety and in the alkoxy moiety or phenylalkyl having 1 to 4 carbon atoms in the alkyl moiety,
R₂ is hydrogen, halogen, alkyl having 1 to 18 carbon atoms, and phenylalkyl having 1 to 4 carbon atoms in the alkyl moiety, and
R₃ is hydrogen, chlorine, alkyl or alkoxy having in each case 1 to 4 carbon atoms or -COOR₆ in which R₆ is as defined above, at least one of the radicals R₁ and R₂ being other than hydrogen;
in the compounds of the formula (IIb)
T is hydrogen or alkyl having 1 to 6 carbon atoms,
T₁ is hydrogen, chlorine or alkyl or alkoxy having in each case 1 to 4 carbon atoms,
n is 1 or 2 and,
if n is 1,
T₂ is chlorine or a radical of the formula -OT₃ or 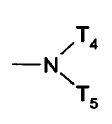 and,
if n is 2, T₂ is a radical of the formula 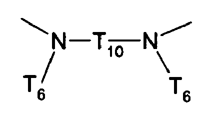 or -O-T₉-O-;
in which
T₃ is hydrogen, alkyl which has 1 to 18 carbon atoms and is unsubstituted or substituted by 1 to 3 hydroxyl groups or by -OCOT₆, alkyl which has 3 to 18 carbon atoms, is interrupted once or several times by -O- or -NT₆- and is unsubstituted or substituted by hydroxyl or -OCOT₆, cycloalkyl which has 5 to 12 carbon atoms and is unsubstituted or substituted by hydroxyl and/or alkyl having 1 to 4 carbon atoms, alkenyl which has 2 to 18 carbon atoms and is unsubstituted or substituted by hydroxyl, phenylalkyl having 1 to 4 carbon atoms in the alkyl
moiety, or a radical of the formula -CH₂CH(OH)-T₇ or 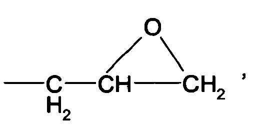 T₄ and T₅ independently of one another are hydrogen, alkyl having 1 to 18 carbon atoms, alkyl which has 3 to 18 carbon atoms and is interrupted once or several times by -O- or
-NT₆-, cycloalkyl having 5 to 12 carbon atoms, phenyl, phenyl which is substituted by alkyl having 1 to 4 carbon atoms, alkenyl having 3 to 8 carbon atoms, phenylalkyl having 1 to 4 carbon atoms in the alkyl moiety or hydroxyalkyl having 2 to 4 carbon atoms,
T₆ is hydrogen, alkyl having 1 to 18 carbon atoms, cycloalkyl having 5 to 12 carbon atoms, alkenyl having 3 to 8 carbon atoms, phenyl, phenyl which is substituted by alkyl having 1 to 4 carbon atoms, phenylalkyl having 1 to 4 carbon atoms in the alkyl moiety,
T₇ is hydrogen, alkyl having 1 to 18 carbon atoms, phenyl which is unsubstituted or substituted by hydroxyl, phenylalkyl having 1 to 4 carbon atoms in the alkyl moiety, or - CH₂OT₈,
T₈ is alkyl having 1 to 18 carbon atoms, alkenyl having 3 to 8 carbon atoms, cycloalkyl having 5 to 10 carbon atoms, phenyl, phenyl which is substituted by alkyl having 1 to 4 carbon atoms, or phenylalkyl having 1 to 4 carbon atoms in the alkyl moiety,
T₉ is alkylene having 2 to 8 carbon atoms, alkenylene having 4 to 8 carbon atoms, alkynylene having 4 carbon atoms, cyclohexylene, alkylene which has 2 to 8 carbon atoms and is interrupted once or several times by -O-, or a radical of the formula - CH₂CH(OH)CH₂OT₁₁OCH₂CH(OH)CH₂- or -CH₂-C(CH₂OH)₂-CH₂-,
T₁₀ is alkylene which has 2 to 20 carbon atoms and can be interrupted once or several times by -O-, or cyclohexylene,
T₁₁ is alkylene having 2 to 8 carbon atoms, alkylene which has 2 to 18 carbon atoms and is interrupted once or several times by -O-, 1,3-cyclohexylene, 1,4-cyclohexylene, 1,3-phenylene or 1,4-phenylene, or
T₁₀ and T₆, together with the two nitrogen atoms, are a piperazine ring;
in the compounds of formula (IIc)
R'₂ is C₁-C₁₂alkyl and k is a number from 1 to 4;
in the compounds of the formula (III)
u is 1 or 2 and r is an integer from 1 to 3, the substituents
Y₁ independently of one another are hydrogen, hydroxyl, phenyl or halogen, halogenomethyl, alkyl having 1 to 12 carbon atoms, alkoxy having 1 to 18 carbon atoms, alkoxy having 1 to 18 carbon atoms which is substituted by a group -COO(C₁-C₁₈alkyl);
if u is 1,
Y₂ is alkyl having 1 to 18 carbon atoms, phenyl which is unsubstituted or substituted by hydroxyl, halogen, alkyl or alkoxy having 1 to 18 carbon atoms;
alkyl which has 1 to 12 carbon atoms and is substituted by -COOH, -COOY₈, -CONH₂, - CONHY₉, -CONY₉Y₁₀, -NH₂, -NHY₉, -NY₉Y₁₀, -NHCOY₁₁, -CN and/or -OCOY₁₁;
alkyl which has 4 to 20 carbon atoms, is interrupted by one or more oxygen atoms and is unsubstituted or substituted by hydroxyl or alkoxy having 1 to 12 carbon atoms, alkenyl having 3 to 6 carbon atoms, glycidyl, cyclohexyl which is unsubstituted or substituted by hydroxyl, alkyl having 1 to 4 carbon atoms and/or -OCOY₁₁, phenylalkyl which has 1 to 5 carbon atoms in the alkyl moiety and is unsubstituted or substituted by hydroxyl, chlorine and/or methyl, -COY₁₂ or -SO₂Y₁₃, or, if u is 2,
Y₂ is alkylene having 2 to 16 carbon atoms, alkenylene having 4 to 12 carbon atoms, xylylene, alkylene which has 3 to 20 carbon atoms, is interrupted by one or more -O- atoms and/or is substituted by hydroxyl, -CH₂CH(OH)CH₂-O-Y₁₅-OCH₂CH(OH)CH₂, -CO-Y₁₆-CO-, - CO-NH-Y₁₇-NH-CO- or -(CH₂)ₘ-CO₂-Y₁₈-OCO-(CH₂)ₘ, in which m is 1, 2 or 3,
Y₈ is alkyl having 1 to 18 carbon atoms, alkenyl having 3 to 18 carbon atoms, alkyl which has 3 to 20 carbon atoms, is interrupted by one or more oxygen or sulfur atoms or -NT₆- and/or is substituted by hydroxyl, alkyl which has 1 to 4 carbon atoms and is substituted by - P(O)(OY₁₄)₂, -NY₉Y₁₀ or -OCOY₁₁ and/or hydroxyl, alkenyl having 3 to 18 carbon atoms, glycidyl, or phenylalkyl having 1 to 5 carbon atoms in the alkyl moiety,
Y₉ and Y₁₀ independently of one another are alkyl having 1 to 12 carbon atoms, alkoxyalkyl having 3 to 12 carbon atoms, dialkylaminoalkyl having 4 to 16 carbon atoms or cyclohexyl having 5 to 12 carbon atoms, or Y₉ and Y₁₀ together are alkylene, oxaalkylene or azaalkylene having in each case 3 to 9 carbon atoms,
Y₁₁ is alkyl having 1 to 18 carbon atoms, alkenyl having 2 to 18 carbon atoms or phenyl,
Y₁₂ is alkyl having 1 to 18 carbon atoms, alkenyl having 2 to 18 carbon atoms, phenyl, alkoxy having 1 to 12 carbon atoms, phenoxy, alkylamino having 1 to 12 carbon atoms or phenylamino,
Y₁₃ is alkyl having 1 to 18 carbon atoms, phenyl or alkylphenyl having 1 to 8 carbon atoms in the alkyl radical,
Y₁₄ is alkyl having 1 to 12 carbon atoms or phenyl,
Y₁₅ is alkylene having 2 to 10 carbon atoms, phenylene or a group -phenylene-M-phenylene-in which M is -O-, -S-, -SO₂-, -CH₂- or -C(CH₃)₂-,
Y₁₆ is alkylene, oxaalkylene or thiaalkylene having in each case 2 to 10 carbon atoms, phenylene or alkenylene having 2 to 6 carbon atoms,
Y₁₇ is alkylene having 2 to 10 carbon atoms, phenylene or alkylphenylene having 1 to 11 carbon atoms in the alkyl moiety, and
Y₁₈ is alkylene having 2 to 10 carbon atoms or alkylene which has 4 to 20 carbon atoms and is interrupted once or several times by oxygen;
in the compounds of the formula (IV) x is an integer from 1 to 3 and the substituents L independently of one another are hydrogen, alkyl, alkoxy or alkylthio having in each case 1 to 22 carbon atoms, phenoxy or phenylthio.

7. A composition according to claim 1 wherein
the 2-hydroxybenzophenones are the 4-hydroxy, 4-methoxy, 4-octyloxy, 4-decyloxy, 4-dodecyloxy, 4-benzyloxy and 2'-hydroxy-4,4'-dimethoxy derivatives;
the 2-(2'-hydroxyphenyl)benzotriazoles are 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl- 2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(α,α-dimethylbenzyl)-2'-hydroxyphenyl)benzotriazole, 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyl-oxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonyl-ethyl)phenyl)benzotriazole, 2-(3'-tert-butyl-5'-[2-(2-ethylhexyloxy)carbonylethyl]-2'-hydroxy-phenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; 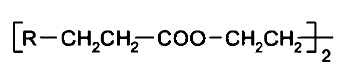 where R = 3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)-phenyl]-benzotriazole; 2-[2'-hydroxy-3'-(1,1,3,3-tetramethylbutyl)-5'-(α,α-dimethylbenzyl)-phenyl]benzotriazole;
the 2-(2-hydroxyphenyly)-1,3,5-triazines are 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenylyl,3,5-triazine, 2,4-bis(2-hydroxy-4-propyloxy-phenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxy-propoxy)phenyl]-4,6-bis(2,4-dimethyl)-1,3,5-triazine, 2-[2-hydroxy-4-(2-hydroxy-3-octyloxy-propyloxy)phenyl]-4,6-bis(2,4-dimethyl)-1,3,5-triazine, 2-[4-(dodecyloxy/tridecyloxy-2-hydroxypropoxy)-2-hydroxy-phenyl]-4,6-bis(2,4-dimethylphenyl)-1,3,5-triazine, 2-[2-hydroxy-4-(2-hydroxy-3-dodecyloxy-propoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxy-propoxy)phenyl]-1,3,5-triazine, 2-(2-hydroxyphenyl)-4-(4-methoxyphenyl)-6-phenyl-1,3,5-triazine, 2-(2-hydroxy-4-(3-(2-ethylhexyl-1-oxy)-2-hydroxypropyloxy]phenyl}-4,6-bis(2,4-dimethylphenyl)-1,3,5-triazine or 2-(2-hydroxy-4-(2-ethylhexyl)oxy)phenyl-4,6-di(4-phenyl)-phenyl-1,3,5-triazine.

8. A composition according to claim 1 wherein the hydroxyphenyl triazines are of formulae 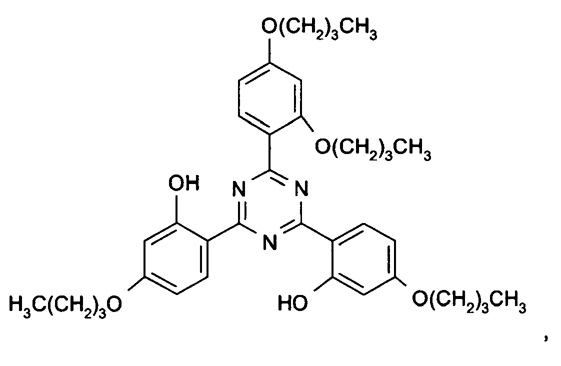 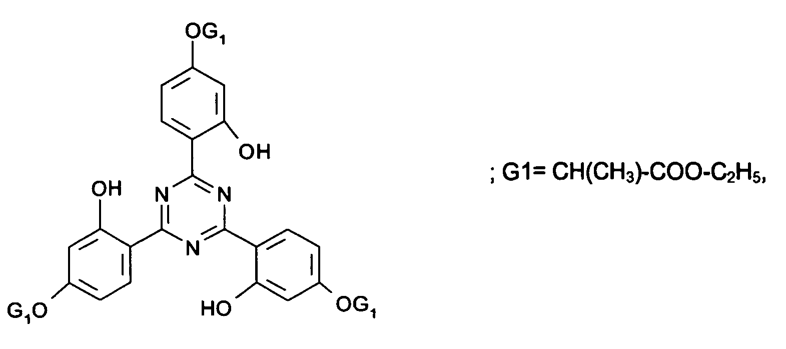 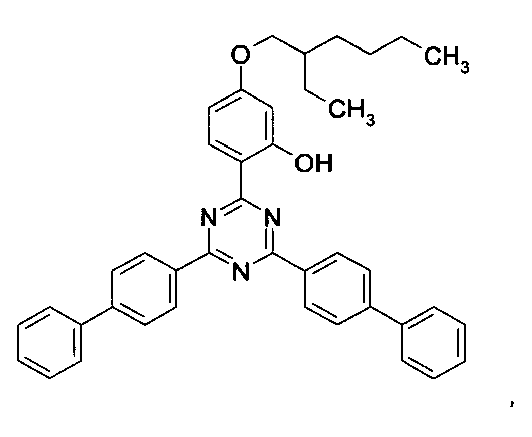 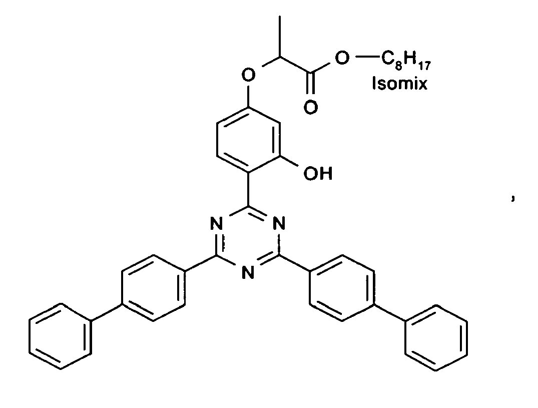 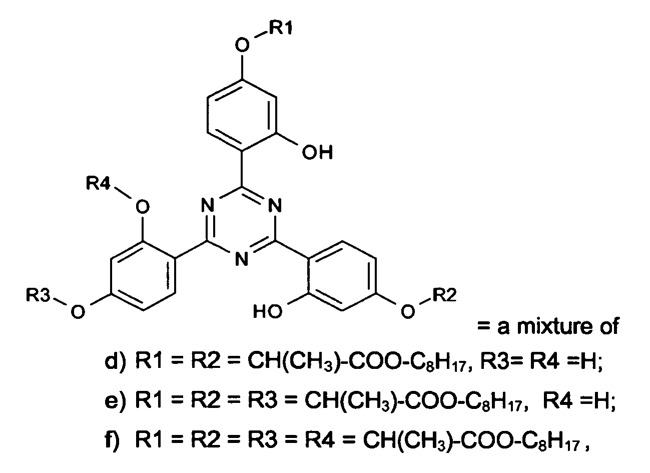 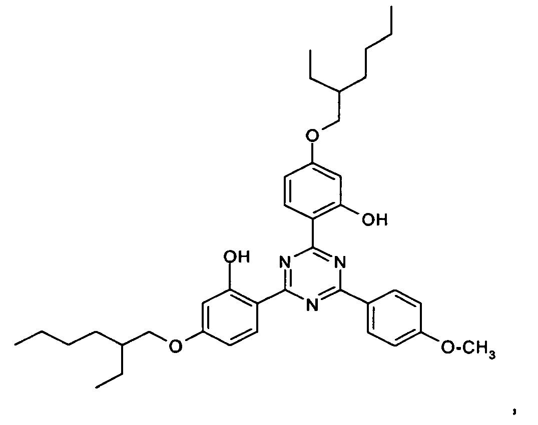 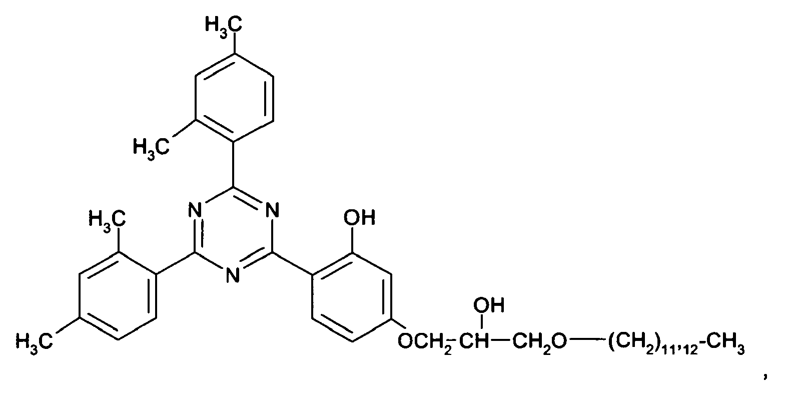 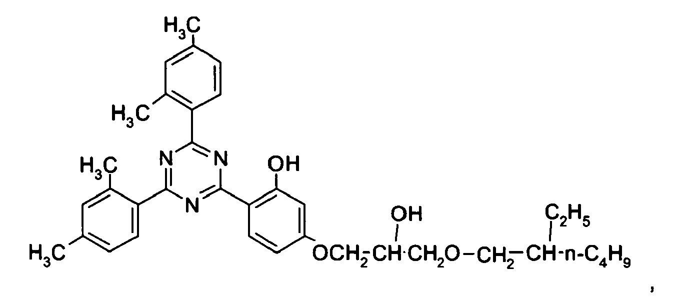 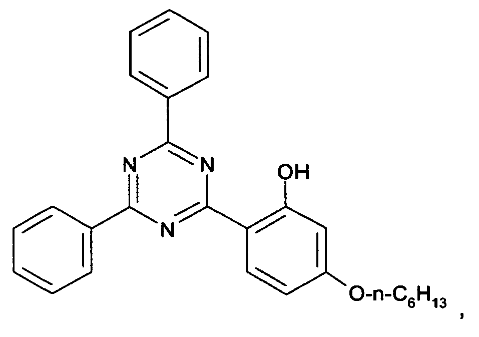 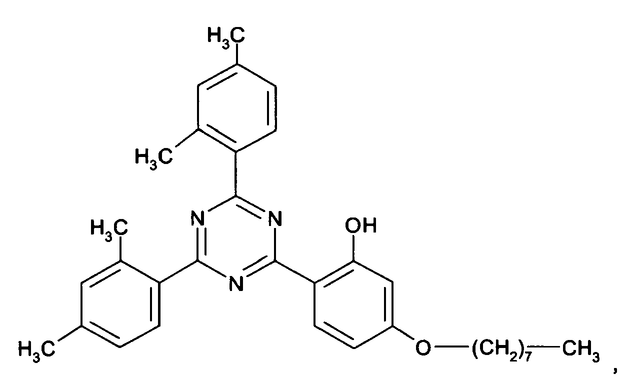 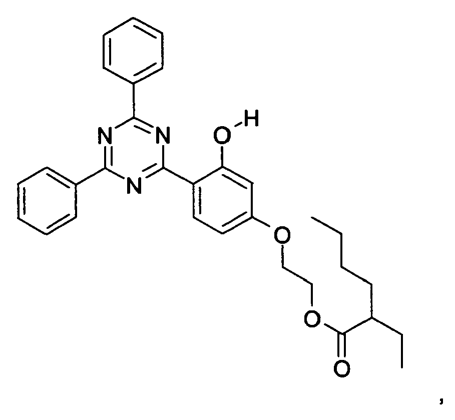 or

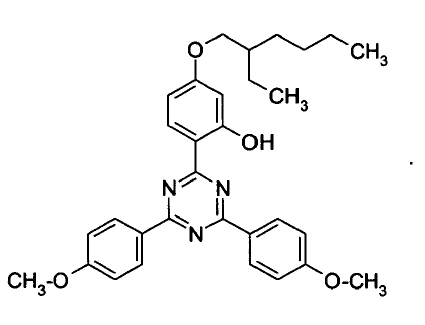

9. A composition according to claim 1 wherein the antimicrobial compound is present in an amount of 0.005% to 5% by weight, based on the weight of the thermoplastic or crosslinkable polymer.

10. A composition according to claim 1 wherein the UV-absorber is present in an amount of 0.01% to 10% by weight, based on the weight of the thermoplastic or crosslinkable polymer.

11. A composition according to claim 1 wherein the weight ratio between the UV-absorber and the antimicrobial compound is from 100 : 1 to 1:10.

12. A process for reducing yellowing upon exposure to actinic radiation of a thermoplastic or crosslinkable polymer composition, which process comprises incorporating into and/or crosslinking or polymerizing a1) a crosslinkable urea formaldehyde resins, a crosslinkable melamine formaldehyde resin, a crosslinkable melamine phenol formaldehyde resin, a crosslinkable epoxy resin, a crosslinkable polyurethane, a crosslinkable rubber, a crosslinkable acrylic or methacrylic resin or a crosslinkable unsaturated polyester resin; or a2) a polymerizable monomer which is an acrylic or methacrylic acid derivative; or a3) a thermoplastic polyester, a thermoplastic polyacrylate or methacrylate, a thermo plastic polyamide, a thermoplastic polystyrene, a thermoplastic halogen containing polymer, a thermoplastic polyacetal or a thermoplastic polyurethane; or a4) a mixture of components a1) to a3); wherein is incorporated b) an antimicrobial compound selected from the group consisting of 2-phenyl phenol, 2,4,4'-trichloro-2'-hydroxydiphenylether, 4,4'-dichloro-2-hydroxydiphenylether, 2,2'-methylenbis-(4-chloro-phenol), 4-(2-t-butyl-5-methylphenoxy)-phenol, 3-(4-chlorophenyl)-1-(3,4-dichloro-phenyl)-urea, 2,4,6-trichlorophenol, AgCl, AgNO₃, Ag₂SO₄, Silver-Zeolite, Silver-Glass, Silver-Zirkonate, Silver-Apatite, thiabendazole, tebuconazole, 1 H-Benzimidazol-2-ylcarbamic acid methyl ester, 10,10'-oxybis-phenoxyarsine, Zink pyrithione, 2-n-octyl-4-isothiazolin-3-on, n-butyl-1,2-benzisothiazolin-3-one, 4,5-di-chloro-N-n-octyl-isothiazolin-3-one and mixtures thereof; and c) a UV-absorber selected from the group consisting of hydroxy benzophenones, hydroxyphenyl benzotriazoles, oxalic acid anilides, hydroxyphenyl triazines and mixtures thereof.

## Patentansprüche

1. Zusammensetzung, umfassend
a1) ein vernetzbares Harnstoff-Formaldehyd-Harz(e), ein vernetzbares Melamin-Formaldehyd-Harz, ein vernetzbares Melamin-Phenol-Formaldehyd-Harz, ein vernetzbares Epoxid-Harz, ein vernetzbares Polyurethan, einen vernetzbaren Kautschuk, ein vernetzbares Acryl- oder Methacryl-Harz oder ein vernetzbares ungesättigtes Polyester-Harz; oder
a2) ein polymerisierbares Monomer, das ein Acryl- oder Methacrylsäure-Derivat ist; oder
a3) einen thermoplastischen gesättigten Polyester, ein thermoplastisches Polyacrylat oder Methacrylat, ein thermoplastisches Polyamid, ein thermoplastisches Polystyrol, ein thermoplastisches Halogenenthaltendes Polymer, ein thermoplastisches Polyacetal oder ein thermoplastisches Polyurethan; oder
a4) ein Gemisch von Komponenten a1) bis a3); worin eingearbeitet ist
b) eine antimikrobielle Verbindung, ausgewählt aus der Gruppe, bestehend aus 2-Phenyl-phenol, 2,4,4'-Trichlor-2'-hydroxy-diphenylether, 4,4'-Dichlor-2-hydroxydiphenylether, 2,2'-Methylen-bis-(4-chlor-phenol), 4-(2-t-Butyl-5-methyl-phenoxy)-phenol, 3-(4-Chlorphenyl)-1-(3,4-dichlor-phenyl)-harnstoff, 2,4,6-Trichlorphenol, AgCl, AgNO₃, Ag₂SO₄, Silber-Zeolith, Silber-Glas, Silber-Zirkonat, Silber-Apatit, Thiabendazol, Tebuconazol, 1H-Benz imidazol-2-yl-carbamidsäure-methylester, 10, 10'-Oxy-bis-phenoxyarsin, Zinkpyrithion, 2-n-Octyl-4-isothiazolin-3-on, n-Butyl-1,2-benzisothiazolin-3-on, 4,5-Di-chlor-N-n-octyl-isothiazolin-3-on und-Gemischen davon; und
c) ein UV-Absorptionsmittel, ausgewählt aus der Gruppe, bestehend aus Hydroxybenzophenonen, Hydroxyphenylbenzotriazolen, Oxalsäureaniliden, Hydroxyphenyl-triazinen und Gemischen davon.

2. Zusammensetzung nach Anspruch 1, umfassend ein vernetzbares Harz, Komponente a1), oder ein polymerisierbares Monomer, Komponente a2), oder ein Gemisch davon.

3. Zusammensetzung nach Anspruch 1, worin das vernetzbare Harz, Komponente a1), ein vernetzbares Acryl- oder Methacryl-Harz oder ein ungesättigtes Polyester-Harz ist und das polymerisierbare Monomer ein Acrylsäureester oder Methacrylsäureester ist.

4. Zusammensetzung nach Anspruch 1, worin die antimikrobielle Verbindung 2-Phenyl-phenol, 2,4,4'-Trichlor-2'-hydroxydiphenylether, 4,4'-Dichlor-2-hydroxydiphenylether, AgCl, Silber-Zeolith, Silber-Glas, Silber-Zirkonat, Silber-Apatit, Thiabendazol, Tebuconazol, 1H-Benzimidazol-2-yl-carb-amidsäure-methylester ist.

5. Zusammensetzung nach Anspruch 4, worin die antimikrobielle Verbindung 2,4,4'-Trichlor-2'-hydroxydiphenylether oder 4,4'-Dichlor-2-hydroxydiphenylether ist.

6. Zusammensetzung nach Anspruch 1, worin das UV-Absorptionsmittel ein Hydroxybenzophenon der Formel I 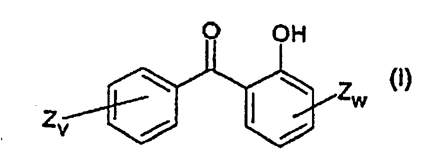 das 2-Hydroxyphenyl-benzotriazol der Formel IIa, IIb oder IIc 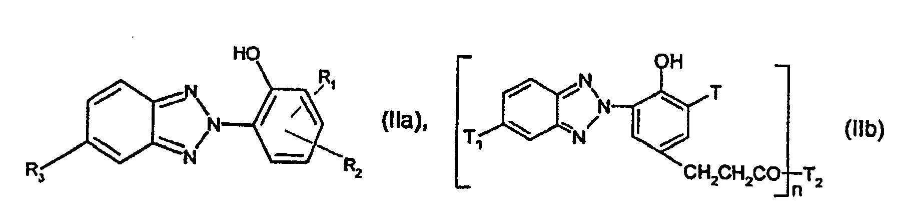 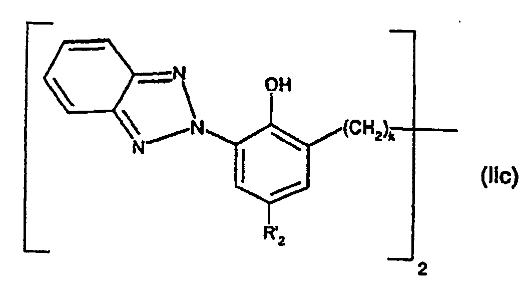 das 2-Hydroxyphenyl-triazin der Formel III 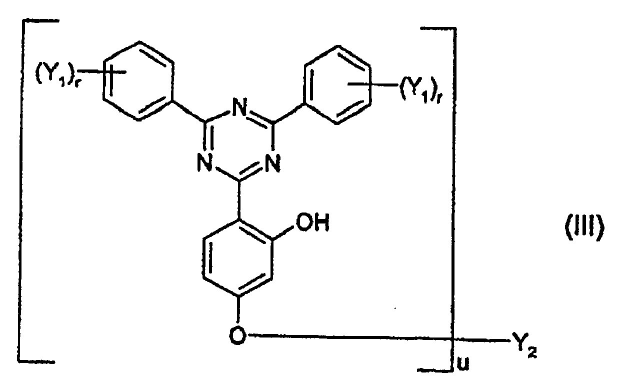 und das Oxanilid der Formel (IV), 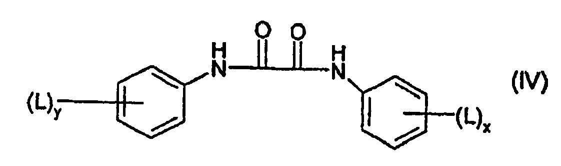 darstellt; wobei in den Verbindungen der Formel (I) v eine ganze Zahl von 1 bis 3 ist und w 1 oder 2 ist und die Substituenten Z unabhängig voneinander Wasserstoff, Halogen, Hydroxyl oder Alkoxy mit 1 bis 12 Kohlenstoff-Atomen darstellen;
in den Verbindungen der Formel (IIa),
R₁ Wasserstoff, Alkyl mit 1 bis 24 Kohlenstoff-Atomen, Phenylalkyl mit 1 bis 4 Kohlenstoff-Atomen in der Alkyl-Einheit, Cycloalkyl mit 5 bis 8 Kohlenstoff-Atomen oder
einen Rest der Formel 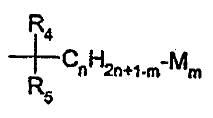 darstellt, worin
R₄ und R₅ unabhängig voneinander Alkyl mit in jedem Fall 1 bis 5 Kohlenstoff-Atomen darstellen, oder R₄, zusammen mit dem Rest CₙH₂ₙ₊₁₋ₘ, einen Cycloalkyl-Rest mit 5 bis 12 Kohlenstoff Atomen bildet,
m 1 oder 2 ist, n eine ganze Zahl von 2 bis 20 ist und
M einen Rest der Formel -COOR₆ darstellt, worin
R₆ Wasserstoff, Alkyl mit 1 bis 12 Kohlenstoff-Atomen, Alkoxyalkyl mit in jedem Fall 1 bis 20 Kohlenstoff-Atomen in der Alkyl-Einheit und in der Alkoxy-Einheit oder Phenylalkyl mit 1 bis 4 Kohlenstoff-Atomen in der Alkyl-Einheit darstellt,
R₂ Wasserstoff, Halogen, Alkyl mit 1 bis 18 Kohlenstoff-Atomen, und Phenylalkyl mit 1 bis 4 Kohlenstoff-Atomen in der Alkyl-Einheit darstellt, und
R₃ Wasserstoff, Chlor, Alkyl oder Alkoxy mit in jedem Fall 1 bis 4 Kohlenstoff-Atomen oder -COOR₆ darstellt,
worin R₆ wie vorstehend definiert ist, wobei mindestens einer der Reste R₁ und R₂ von Wasserstoff verschieden ist;
in den Verbindungen der Formel (IIb)
T Wasserstoff oder Alkyl mit 1 bis 6 Kohlenstoff-Atomen darstellt,
T₁ Wasserstoff, Chlor oder Alkyl oder Alkoxy mit in jedem Fall 1 bis 4 Kohlenstoff-Atomen darstellt, n 1 oder 2 ist und, wenn n 1 ist,
T₂ Chlor oder einen Rest der Formel -OT₃ oder 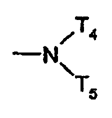 darstellt, und
wenn n 2 ist, T₂ einen Rest der Formel 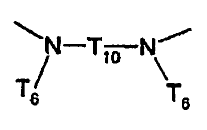 oder
-O-T₉-O- darstellt;
worin
T₃ Wasserstoff, Alkyl, das 1 bis 18 Kohlenstoff-Atome aufweist, und das unsubstituiert oder substituiert ist mit 1 bis 3 Hydroxyl-Gruppen oder mit -OCOT₆, Alkyl, das 3 bis 18 Kohlenstoff-Atome aufweist, das ein oder mehrere Male durch -O- oder -NT₆- unterbrochen ist und unsubstituiert oder substituiert ist mit Hydroxyl oder -OCOT₆, Cycloalkyl, das 5 bis 12 Kohlenstoff-Atome aufweist, und das unsubstituiert oder substituiert ist mit Hydroxyl und/oder Alkyl mit 1 bis 4 Kohlenstoff-Atomen, Alkenyl, das 2 bis 18 Kohlenstoff-Atome aufweist, und das unsubstituiert oder substituiert ist mit Hydroxyl, Phenylalkyl mit 1 bis 4 Kohlenstoff-Atomen in der Alkyl-Einheit, oder einen Rest der Formel -CH₂CH(OH)-T₇ oder 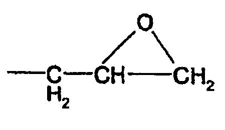 darstellt,
T₄ und T₅ unabhängig voneinander Wasserstoff, Alkyl mit 1 bis 18 Kohlenstoff-Atomen, Alkyl, das 3 bis 18 Kohlenstoff-Atome aufweist, und das ein oder mehrere Male durch -O- oder -NT₆- unterbrochen ist, Cycloalkyl mit 5 bis 12 Kohlenstoff-Atomen, Phenyl, Phenyl, das mit Alkyl mit 1 bis 4 Kohlenstoff-Atomen substituiert ist, Alkenyl mit 3 bis 8 Kohlenstoff-Atomen, Phenylalkyl mit 1 bis 4 Kohlenstoff-Atomen in der Alkyl-Einheit oder Hydroxyalkyl mit 2 bis 4 Kohlenstoff-Atomen darstellen,
T₆ Wasserstoff, Alkyl mit 1 bis 18 Kohlenstoff-Atomen, Cycloalkyl mit 5 bis 12 Kohlenstoff-Atomen, Alkenyl mit 3 bis 8 Kohlenstoff-Atomen, Phenyl, Phenyl, das mit Alkyl mit 1 bis 4 Kohlenstoff-Atomen substituiert ist, Phenylalkyl mit 1 bis 4 Kohlenstoff-Atomen in der Alkyl-Einheit darstellt,
T₇ Wasserstoff, Alkyl mit 1 bis 18 Kohlenstoff-Atomen, Phenyl, das unsubstituiert oder substituiert ist mit Hydroxyl, Phenylalkyl mit 1 bis 4 Kohlenstoff-Atomen in der Alkyl-Einheit, oder -CH₂OT₈ darstellt,
T₈ Alkyl mit 1 bis 18 Kohlenstoff-Atomen, Alkenyl mit 3 bis 8 Kohlenstoff-Atomen, Cycloalkyl mit 5 bis 10 Kohlenstoff-Atomen, Phenyl, Phenyl, das mit Alkyl mit 1 bis 4 Kohlenstoff-Atomen substituiert ist oder Phenylalkyl mit 1 bis 4 Kohlenstoff-Atomen in der Alkyl-Einheit darstellt,
T₉ Alkylen mit 2 bis 8 Kohlenstoff-Atomen, Alkenylen mit 4 bis 8 Kohlenstoff-Atomen, Alkinylen mit 4 Kohlenstoff-Atomen, Cyclohexylen, Alkylen, das 2 bis 8 Kohlenstoff-Atome aufweist und ein oder mehrere Male durch -O- unterbrochen ist, oder einen Rest der Formel -CH₂CH(OH)CH₂OT₁₁OCH₂CH(OH)CH₂- oder -CH₂-C(CH₂OH)₂-CH₂- darstellt,
T₁₀ Alkylen, das 2 bis 20 Kohlenstoff-Atome aufweist, und das ein oder mehrere Male durch -O- unterbrochen sein kann, oder Cyclohexylen darstellt,
T₁₁ Alkylen mit 2 bis 8 Kohlenstoff-Atomen, Alkylen, das 2 bis 18 Kohlenstoff-Atome aufweist, und das ein oder mehrere Male durch -O- unterbrochen ist, 1,3-Cyclohexylen, 1,4-Cyclohexylen, 1,3-Phenylen oder 1,4-Phenylen darstellt, oder
T₁₀ und T₆, zusammen mit den zwei Stickstoff-Atomen, einen Piperazin-Ring bilden;
in den Verbindungen der Formel (IIc) R'₂ C₁-C₁₂-Alkyl darstellt und k eine Zahl von 1 bis 4 ist;
in den Verbindungen der Formel (III)
u 1 oder 2 ist und r eine ganze Zahl von 1 bis 3 ist, die Substituenten
Y₁ unabhängig voneinander Wasserstoff, Hydroxyl, Phenyl oder Halogen, Halogenomethyl, Alkyl mit 1 bis 12 Kohlenstoff-Atomen, Alkoxy mit 1 bis 18 Kohlenstoff-Atomen, Alkoxy mit 1 bis 18 Kohlenstoff-Atomen, das mit einer Gruppe -COO(C₁-C₁₈-Alkyl) substituiert ist, darstellen; wenn u 1 ist,
Y₂ Alkyl mit 1 bis 18 Kohlenstoff-Atomen, Phenyl, das unsubstituiert oder substituiert ist mit Hydroxyl, Halogen, Alkyl oder Alkoxy mit 1 bis 18 Kohlenstoff-Atomen;
Alkyl, das 1 bis 12 Kohlenstoff-Atome aufweist, und substituiert ist mit -COOH, -COOY₈, -CONH₂, -CONHY₉, -CONY₉Y₁₀, -NH₂, -NHY₉ , -NY₉Y₁₀, -NHCOY₁₁, -CN und/oder -OCOY₁₁;
Alkyl, das 4 bis 20 Kohlenstoff-Atome aufweist, das durch ein oder mehrere Sauerstoff-Atome unterbrochen ist und unsubstituiert oder substituiert ist mit Hydroxyl oder Alkoxy mit 1 bis 12 Kohlenstoff-Atomen, Alkenyl mit 3 bis 6 Kohlenstoff-Atomen, Glycidyl, Cyclohexyl, das unsubstituiert oder substituiert ist mit Hydroxyl, Alkyl mit 1 bis 4 Kohlenstoff-Atomen und/oder -OCOY₁₁, Phenylalkyl, das 1 bis 5 Kohlenstoff-Atome in der Alkyl-Einheit aufweist, und das unsubstituiert oder substituiert ist mit Hydroxyl, Chlor und/oder Methyl, -COY₁₂ oder -SO₂Y₁₃, darstellt oder, wenn u 2 ist,
Y₂ Alkylen mit 2 bis 16 Kohlenstoff-Atomen, Alkenylen mit 4 bis 12 Kohlenstoff-Atomen, Xylylen, Alkylen, das 3 bis 20 Kohlenstoff-Atome aufweist, das durch ein oder mehrere -O-Atome unterbrochen ist und/oder substituiert ist mit Hydroxyl, -CH₂CH (OH) CH₂-O-Y₁₅-OCH₂CH (OH) CH₂, -CO-Y₁₆-CO-, -CO-NH-Y₁₇-NH-CO- oder - (CH₂)ₘ-CO₂-Y₁₈-OCO-(CH₂)ₘ, worin m 1, 2 oder 3 ist, darstellt,
Y₈ Alkyl mit 1 bis 18 Kohlenstoff-Atomen, Alkenyl mit 3 bis 18 Kohlenstoff-Atomen, Alkyl, das 3 bis 20 Kohlenstoff-Atome aufweist, das durch ein oder mehrere Sauerstoff- oder Schwefel-Atome oder -NT₆- unterbrochen ist und/oder substituiert ist mit Hydroxyl, Alkyl, das 1 bis 4 Kohlenstoff-Atome aufweist, und das substituiert ist mit -P(O)(OY₁₄)₂, -NY₉Y₁₀ oder -OCOY₁₁ und/oder Hydroxyl, Alkenyl mit 3 bis 18 Kohlenstoff-Atomen, Glycidyl oder Phenylalkyl mit 1 bis 5 Kohlenstoff-Atomen in der Alkyl-Einheit darstellt,
Y₉ und Y₁₀ unabhängig voneinander Alkyl mit 1 bis 12 Kohlenstoff-Atomen, Alkoxyalkyl mit 3 bis 12 Kohlenstoff-Atomen, Dialkylaminoalkyl mit 4 bis 16 Kohlenstoff-Atomen oder Cyclohexyl mit 5 bis 12 Kohlenstoff-Atomen darstellen, oder Y₉ und Y₁₀ zusammen Alkylen, Oxaalkylen oder Azaalkylen mit in jedem Fall 3 bis 9 Kohlenstoff-Atomen darstellen,
Y₁₁ Alkyl mit 1 bis 18 Kohlenstoff-Atomen, Alkenyl mit 2 bis 18 Kohlenstoff-Atomen oder Phenyl darstellt,
Y₁₂ Alkyl mit 1 bis 18 Kohlenstoff-Atomen, Alkenyl mit 2 bis 18 Kohlenstoff-Atomen, Phenyl, Alkoxy mit 1 bis 12 Kohlenstoff-Atomen, Phenoxy, Alkylamino mit 1 bis 12 Kohlenstoff-Atomen oder Phenylamino darstellt,
Y₁₃ Alkyl mit 1 bis 18 Kohlenstoff-Atomen, Phenyl oder Alkylphenyl mit 1 bis 8 Kohlenstoff-Atomen in dem Alkyl-Rest darstellt,
Y₁₄ Alkyl mit 1 bis 12 Kohlenstoff-Atomen oder Phenyl darstellt,
Y₁₅ Alkylen mit 2 bis 10 Kohlenstoff-Atomen, Phenylen oder eine Gruppe -Phenylen-M-phenylen-, worin M -O-, -S-, -SO₂-, -CH₂- oder -C(CH₃)₂- darstellt, darstellt,
Y₁₆ Alkylen, Oxaalkylen oder Thiaalkylen mit in jedem Fall 2 bis 10 Kohlenstoff-Atomen, Phenylen oder Alkenylen mit 2 bis 6 Kohlenstoff-Atomen darstellt,
Y₁₇ Alkylen mit 2 bis 10 Kohlenstoff-Atomen, Phenylen oder Alkylphenylen mit 1 bis 11 Kohlenstoff-Atomen in der A1-kyl-Einheit darstellt, und
Y₁₈ Alkylen mit 2 bis 10 Kohlenstoff-Atomen oder Alkylen, das 4 bis 20 Kohlenstoff-Atome aufweist, und das ein oder mehrere Male durch Sauerstoff unterbrochen ist, darstellt;
in den Verbindungen der Formel (IV), x eine ganze Zahl von 1 bis 3 ist und die Substituenten L unabhängig voneinander Wasserstoff, Alkyl, Alkoxy oder Alkylthio mit in jedem Fall 1 bis 22 Kohlenstoff-Atomen, Phenoxy oder Phenylthio darstellen.

7. Zusammensetzung nach Anspruch 1, worin
die Hydroxybenzophenone die 4-Hydroxy-, 4-Methoxy-, 4-Octyloxy-, 4-Decyloxy-, 4-Dodecyloxy-, 4-Benzyloxy- oder 2'-Hydroxy-4,4'-dimethoxy-Derivate darstellen; die 2-(2'-Hydroxyphenyl)-benzotriazole 2-(2'-Hydroxy-5'-methylphenyl) -benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethyl-butyl)-phenyl)-benzotriazol, 2-(3',5'-Di-tert-butyl-2'-hydroxyphe-nyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octyl-oxyphenyl)-benzotriazol, 2-(3',5'-Di-tert-amyl-2'-hydroxyphenyl)-benzotriazol, 2-(3',5'-Bis-(α,α-dimethylbenzyl)-2'-hydroxyphenyl)-benzotriazol, 2-(3'-tert-Butyl-2'-hydroxy-5'-(2-octyloxycarbonyl-ethyl)-phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonyl-ethyl)-phenyl)-5-chlor-benzotriazol, 2-(3'-tert-Butyl-2'-hydroxy-5'-(2-methoxycarbonylethyl)-phenyl)-benzotriazol, 2-(3'-tert-Butyl-2'-hydroxy-5'-(2-octyloxycarbonyl-ethyl)-phenyl)-benzotriazol, 2-(3'-tert-Butyl-5'-[2-(2-ethylhexyloxy)-carbonylethyl]-2'-hydroxyphenyl)-benzotriazol, 2-(3'-Dodecyl-2'-hydroxy-5'-methylphe-nyl)-benzotriazol, 2-(3'-tert-Butyl-2'-hydroxy-5'-(2-isooc-tyl-oxycarbonyl-ethyl)-phenyl-benzotriazol, 2,2'-Methylen-bis-[4-(1,1,3,3-tetramethyl-butyl)-6-benzotriazol-2-yl-phenol] ; das Umesterungs-Produkt von 2-[3'-tert-Butyl-5'-(2-methoxycarbonyl-ethyl)-2'-hydroxyphenyl]-2H-benzotriazol mit Polyethylenglycol 300; [R-CH₂CH₂-COO-CH₂CH₂-]-₂, worin R = 3'-tert-Butyl-4'-hydroxy-5'-2H-benzotriazol-2-ylphenyl, 2-[2'-Hydroxy-3'-(α,α-dimethylbenzyl)-5'-(1,1,3,3-tetramethylbutyl)-phenyl]-benzotriazol, 2-[2'-Hydroxy-3'-(1,1,3,3-tetramethyl-butyl)-5'-(α,α-dimethyl-benzyl)-phenyl]-benzotriazol darstellen;
die 2-(2-Hydroxy-phenyl)-1,3,5-triazine 2,4,6-Tris-(2-hydroxy-4-octyloxyphenyl)-1,3,5-triazin, 2-(2-Hydroxy-4-octyloxy-phenyl)-4,6-bis-(2,4-dimethylphenyl)-1,3,5-triazin, 2-(2,4-Dihydroxy-phenyl)-4,6-bis-(2,4-dimethyl-phenyl)-1,3,5-triazin, 2,4-Bis-(2-hydroxy-4-propyloxy-phenyl)-6-(2,4-dimethylphenyl)-1,3,5-triazin, 2-(2-Hydroxy-4-octyloxy-phenyl)-4,6-bis-(4-methylphenyl)-1,3,5-triazin, 2-(2-Hydroxy-4-dodecyloxy-phenyl)-4,6-bis-(2,4-dimethylphenyl)-1,3,5-triazin, 2-(2-Hydroxy-4-tridecyloxy-phenyl)-4,6-bis-(2,4-dimethylphenyl)-1,3,5-triazin, 2-[2-Hydroxy-4-(2-hydroxy-3-butyloxy-propoxy)-phenyl]-4,6-bis-(2,4-dimethyl)-1,3,5-triazin, 2-[2-Hydroxy-4-(2-hydroxy-3-octyloxy-propyloxy)-phenyl]-4,6-bis-(2,4-dimethyl)-1,3,5-triazin, 2-[4-(Dodecyloxy / Tridecyloxy-2-hydroxypropoxy)-2-hydroxy-phenyl]-4,6-bis-(2,4-dimethylphenyl)-1,3,5-triazin, 2-[2-Hydroxy-4-(2-hydroxy-3-dodecyloxy-propoxy)-phenyl]-4,6-bis-(2,4-dimethylphenyl)-1,3,5-triazin, 2-(2-Hydroxy-4-hexyloxy)-phenyl-4,6-diphenyl-1,3,5-triazin, 2-(2-Hydroxy-4-methoxy-phenyl)-4,6-diphenyl-1,3,5-triazin, 2,4,6-Tris-[2-hydroxy-4-(3-butoxy-2-hydroxy-propoxy)-phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxy-propyloxy]-phenyl}-4,6-bis-(2,4-dimethylphenyl)-1,3,5-triazin oder 2-(2-Hydroxy-4-(2-ethylhexyl)-oxy)-phenyl-4,6-di-(4-phenyl)-phenyl-1,3,5-triazin darstellen.

8. Zusammensetzung nach Anspruch 1, worin die Hydroxyphenyltriazine die Formeln aufweisen 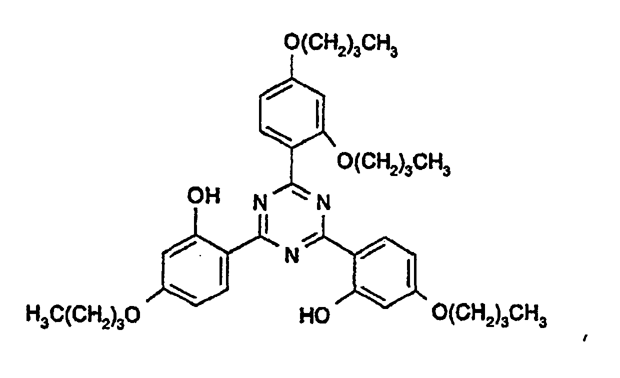 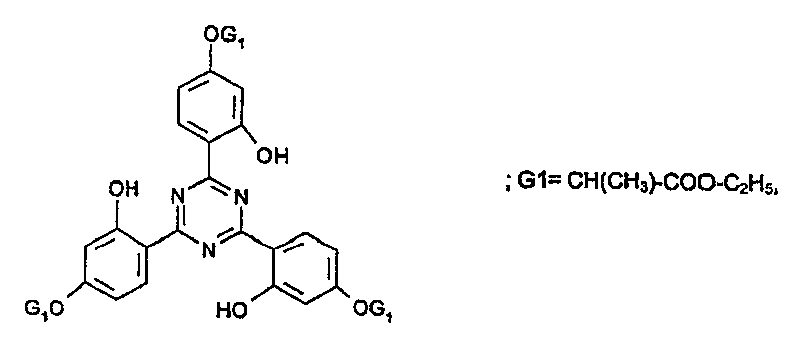 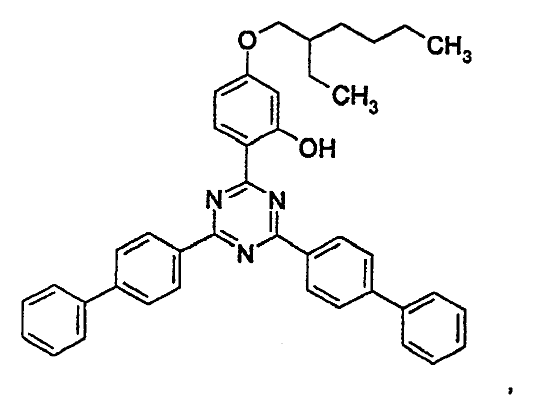 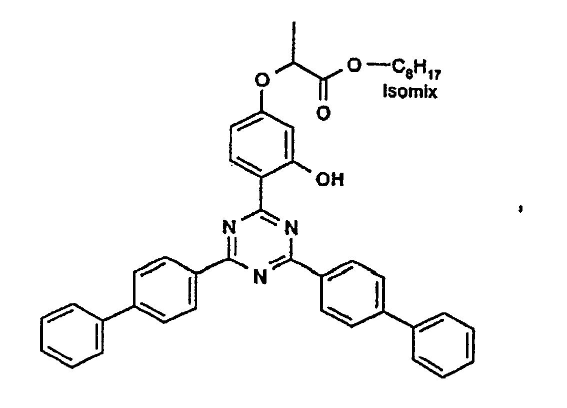 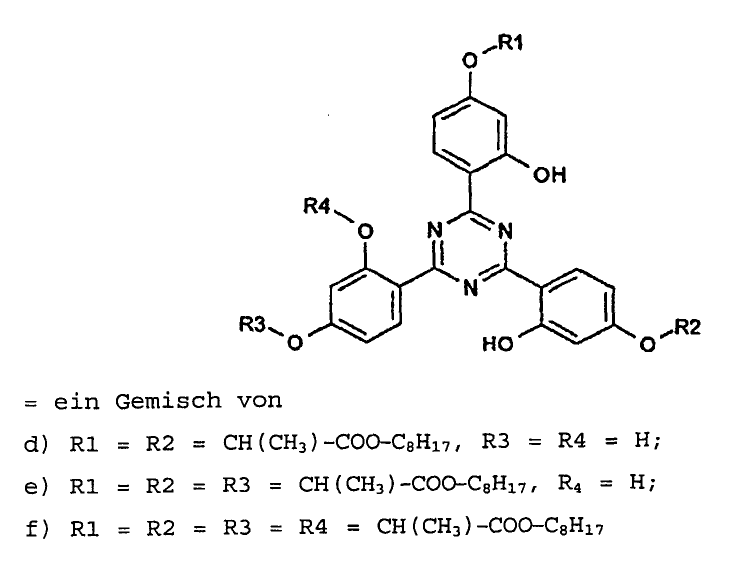 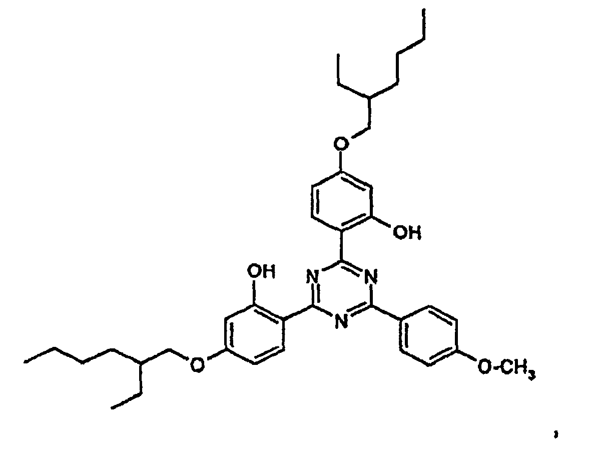 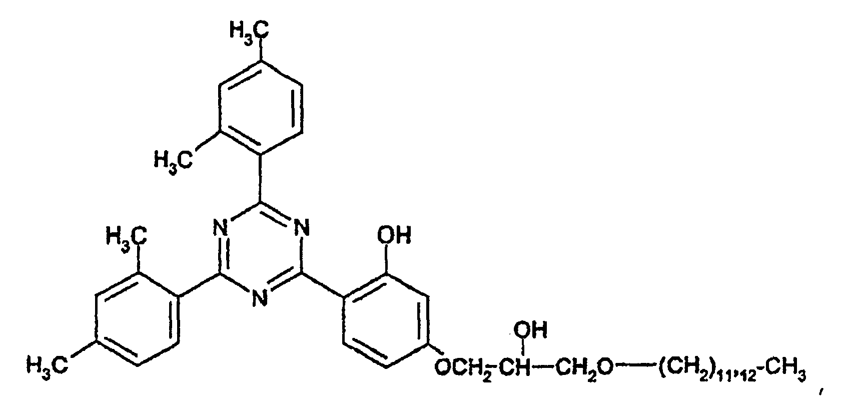 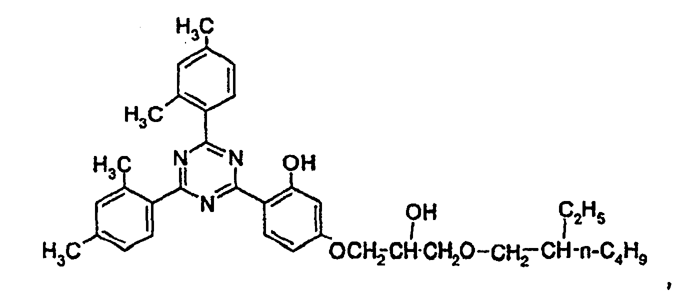 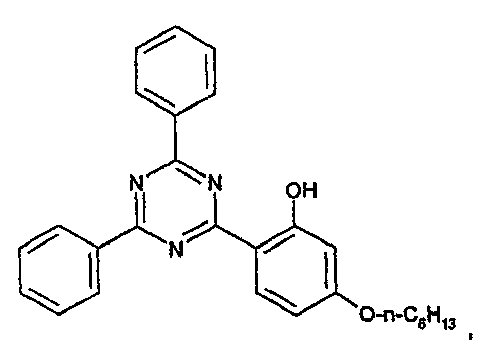 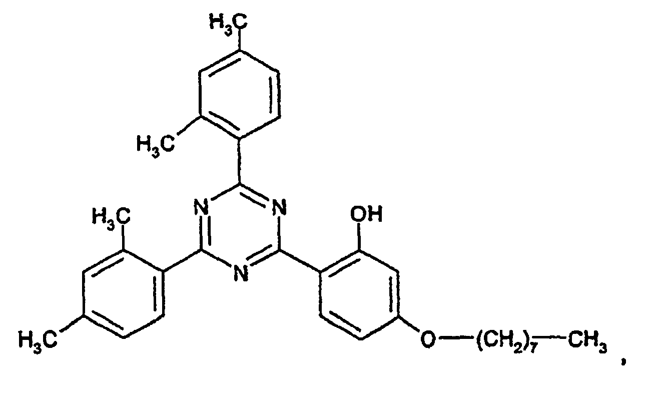 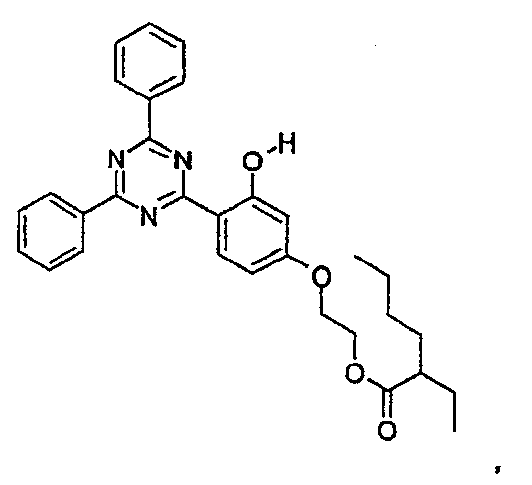 oder

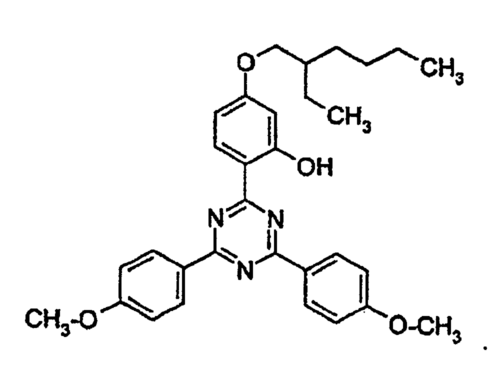

9. Zusammensetzung nach Anspruch 1, worin die antimikrobielle Verbindung in einer Menge von 0,005 % bis 5 Gew.-%, bezogen auf das Gewicht von dem thermoplastischen oder vernetzbaren Polymer, vorliegt.

10. Zusammensetzung nach Anspruch 1, worin das UV-Absorptionsmittel in einer Menge von 0,01 % bis 10 Gew.-%, bezogen auf das Gewicht von dem thermoplastischen oder vernetzbaren Polymer, vorliegt.

11. Zusammensetzung nach Anspruch 1, worin das Gewichtsverhältnis zwischen dem UV-Absorptionsmittel und der antimikrobiellen Verbindung von 100 : 1 bis 1 : 10 ist.

12. Verfahren zum Vermindern des Vergilbens nach Aussetzung von einer thermoplastischen oder vernetzbaren PolymerZusammensetzung einer aktinischen Strahlung, wobei das Verfahren umfasst Einarbeiten in und/oder Vernetzen oder Polymerisieren
a1) eines vernetzbaren Harnstoff-Formaldehyd-Harzes /Harzen, eines vernetzbaren Melamin-Formaldehyd-Harzes, eines vernetzbaren Melamin-Phenol-Formaldehyd-Harzes, eines vernetzbaren Epoxid-Harzes, eines vernetzbaren Polyurethans, eines vernetzbaren Kautschuks, eines vernetzbaren Acryl- oder Methacryl-Harzes oder eines vernetzbaren ungesättigten Polyester-Harzes; oder
a2) eines polymerisierbaren Monomers, das ein Acryl- oder Methacrylsäure-Derivat darstellt; oder
a3) eines thermoplastischen Polyesters, eines thermoplastischen Polyacrylats oder Methacrylats, eines thermoplastischen Polyamids, eines thermoplastischen Polystyrols, eines thermoplastischen Halogen-enthaltenden Polymers, eines thermoplastischen Polyacetals oder eines thermoplastischen Polyurethans; oder
a4) eines Gemisches von Komponenten a1) bis a3);
worin eingearbeitet ist
b) eine antimikrobielle Verbindung, ausgewählt aus der Gruppe, bestehend aus 2-Phenyl-phenol, 2,4,4'-Trichlor-2'-hydroxy-diphenylether, 4,4'-Dichlor-2-hydroxydiphenylether, 2,2'-Methylen-bis-(4-chlor-phenol), 4-(2-t-Butyl-5-methylphenoxy)-phenol, 3-(4-Chlorphenyl)-1-(3,4-dichlor-phenyl)-harnstoff, 2,4,6-Trichlorphenol, AgCl, AgNO₃, Ag₂SO₄, Silber-Zeolith, Silber-Glas, Silber-Zirkonat, Silber-Apatit, Thiabendazol, Tebuconazol, 1H-Benzimidazol-2-yl-carbamidsäure-methylester, 10,10'-Oxy-bis-phenoxyarsin, Zinkpyrithion, 2-n-Octyl-4-isothiazolin-3-on, n-Butyl-1, 2-benzisothiazolin-3-on, 4, 5-Di-chlor-N-n-octyl-isothiazolin-3-on und Gemischen davon; und
c) ein UV-Absorptionsmittel, ausgewählt aus der Gruppe, bestehend aus Hydroxy-benzophenonen, Hydroxyphenylbenzotriazolen, Oxalsäureaniliden, Hydroxyphenyl-triazinen und Gemischen davon.

## Revendications

1. Composition comprenant
a1) des résines urée-formaldéhyde réticulables, une résine mélanine-formaldéhyde réticulable, une résine mélamine-formaldéhyde-phénol réticulable, une résine époxy réticulable, un poly(uréthane) réticulable, un caoutchouc réticulable, une résine acrylique ou méthacrylique réticulable ou une résine poly(ester) insaturé réticulable ; ou
a2) un monomère polymérisable qui est un dérivé d'acide acrylique ou méthacrylique ; ou
a3) un poly(ester) saturé thermoplastique, un poly(acrylate) ou méthacrylate thermoplastique, un poly(amide) thermoplastique, un poly(styrène) thermoplastique, un polymère thermoplastique contenant un ou des halogènes, un poly(acétal) thermoplastique ou un poly(uréthane) thermoplastique ; ou
a4) un mélange des composants de a1) à a3) ; dans lequel est incorporé
b) un composé antimicrobien choisi dans le groupe consistant en le 2-phényl phénol, le 2,4,4'-trichloro-2'-hydroxydiphényléther, le 4,4'-dichloro-2-hydroxydiphényl-éther, le 2,2'-méthylènbis-(4-chloro-phénol), le 4-(2-t-butyl-5-méthylphénoxy)-phénol, la 3-(4-chloro-phényl)-1-(3,4-dichloro-phényl)urée, le 2,4,6-trichlorophénol, AgCl, AgNO₃, Ag₂SO₄, l'argent-zéolite, l'argent-verre, l'argent-zirconate, l'argent-apatite, le thiabendazole, le tébuconazole, l'ester de méthyle d'acide 1H-benzimidazol-2-ylcarbamique, 1a 10,10'-oxybis-phénoxyarsine, le zinc pyrithione, la 2-n-octyl-4-isothiazolin-3-one, la n-butyl-1,2-benzisothiazolin-3-one, la 4,5-di-chloro-N-n-octyl-isothiazolin-3-one et leurs mélanges ;
c) un agent anti-UV choisi dans le groupe consistant en les hydroxy benzophénones, les hydroxyphényl benzotriazoles, les anilides d'acide oxalique, les hydroxyphényl triazines et leurs mélanges.

2. Composition selon la revendication 1, comprenant une résine réticulable, le composant a1) ou un monomère polymérisable, le composant a2) ou l'un de leurs mélanges.

3. Composition selon la revendication 1, dans laquelle la résine réticulable, le composant a1) est une résine acrylique ou méthacrylique réticulable ou une résine poly(ester) insaturé et le monomère polymérisable est un ester d'acide acrylique ou ester d'acide méthacrylique.

4. Composition selon la revendication 1, dans laquelle le composé antimicrobien est le 2-phényl phénol, le 2,4,4'-trichloro-2'-hydroxydiphényléther, le 4,4'-dichloro-2-hydroxydiphényl-éther, AgCl, l'argent-zéolite, l'argent-verre, l'argent-zirconate, l'argent-apatite, le thiabendazole, le tébuconazole, l'ester de méthyle d'acide 1 H-benzimidazol-2-ylcarbamique.

5. Composition selon la revendication 4, dans laquelle le composé antimicrobien est le 2,4,4'-trichloro-2'-hydroxydiphényléther ou le 4,4'-dichloro-2-hydroxydiphényl-éther.

6. Composition selon la revendication 1, dans laquelle l'agent anti-UV est une hydroxybenzophénone répondant à la formule I 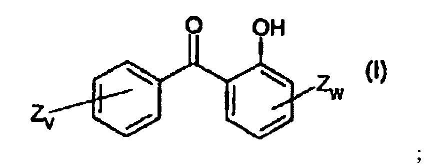 le 2-hydroxyphénylbenzotriazole répondant à la formule IIa, IIb ou IIc 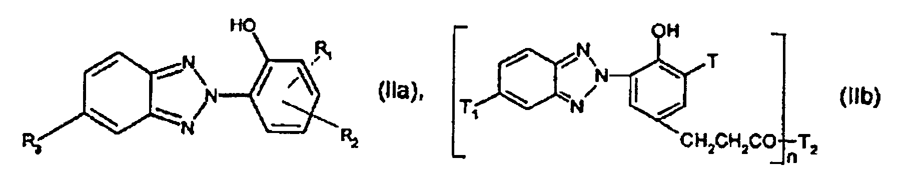 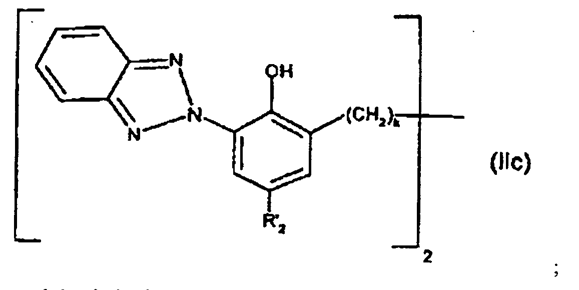 la 2-hydroxyphényltriazine répondant à la formule III 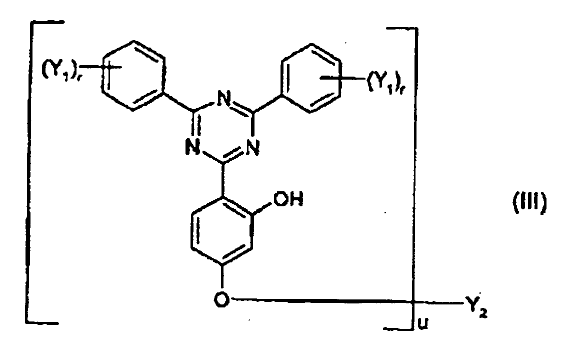 et l'oxanilide répondant à la formule (IV) 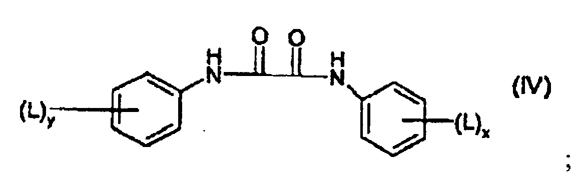 dans lesquelles dans les composés de formule (I), v est un nombre entier de 1 à 3 et w vaut 1 ou 2 et les substituants Z indépendamment les uns des autres sont un atome d'hydrogène, d'halogène, un groupe hydroxyle ou alcoxy comportant 1 à 12 atomes de carbone ; dans les composés de formule (IIa),
R₁ est un atome d'hydrogène, un groupe alkyle comportant 1 à 24 atomes de carbone, phénylalkyle comportant 1 à 4 atomes de carbone dans le fragment alkyle, cycloalkyle comportant 5 à 8 atomes de carbone ou un radical de formule 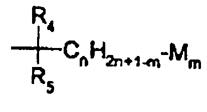 où
R₄ et R₅ indépendamment l'un de l'autre sont un groupe alkyle comportant dans chaque cas 1 à 5 atomes de carbone, ou bien R₄, conjointement avec le radical CₙH₂ₙ₊₁₋ₘ forment un radical cycloalkyle comportant 5 à 12 atomes de carbone,
m vaut 1 ou 2, n est un nombre entier de 2 à 20 et
M est un radical de formule -COOR₆ où
R₆ est un atome d'hydrogène, un groupe alkyle comportant 1 à 12 atomes de carbone, alcoxyalkyle comportant dans chaque cas 1 à 20 atomes de carbone dans le fragment alkyle et dans le fragment alcoxy ou phénylalkyle comportant 1 à 4 atomes de carbone dans le fragment alkyle,
R₂ est un atome d'hydrogène, d'halogène, un groupe alkyle comportant 1 à 18 atomes de carbone, et phénylalkyle comportant 1 à 4 atomes de carbone dans le fragment alkyle, et
R₃ est un atome d'halogène, de chlore, un groupe alkyle ou alcoxy comportant dans chaque cas 1 à 4 atomes de carbone ou -COOR₆ dans lequel R₆ est comme défini ci-dessus, au moins l'un des radicaux R₁ et R₂ étant autre qu'un atome d'hydrogène ; dans les composés de formule (IIb),
T est un atome d'hydrogène ou un groupe alkyle comportant 1 à 6 atomes de carbone,
T₁ est un atome d'hydrogène, de chlore, un groupe alkyle ou alcoxy comportant dans chaque cas 1 à 4 atomes de carbone,
n vaut 1 ou 2 et,
si n vaut 1,
T₂ est un atome de chlore ou un radical de formule -OT₃ ou 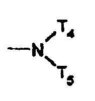 et, si n vaut 2, T₂ est un radical de formule 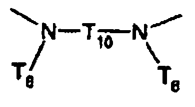 ou -O-T₃-O-où
T₃ est un atome d'hydrogène, un groupe alkyle qui comporte 1 à 18 atomes de carbone et est non substitué ou substitué par 1 à 3 groupes hydroxyle ou par - OCOT₆, alkyle qui comporte 3 à 18 atomes de carbone, est interrompu une ou plusieurs fois par -O- ou -NT₆- et est non substitué ou substitué par un groupe hydroxyle ou -OCOT₆, cycloalkyle qui comporte 5 à 12 atomes de carbone et est non substitué ou substitué par un groupe hydroxyle et/ou alkyle comportant 1 à 4 atomes de carbone, alcényle qui comporte 2 à 18 atomes de carbone et est non substitué ou substitué par un groupe hydroxyle, phénylalkyle comportant 1 à 4 atomes de carbone dans le fragment alkyle, ou un radical de formule -CH₂CH(OH)-T₇ ou 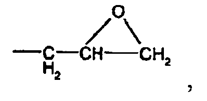 T₄ et T₅ sont indépendamment l'un de l'autre un atome d'hydrogène, un groupe alkyle comportant 1 à 18 atomes de carbone, alkyle qui comporte 3 à 18 atomes de carbone et est interrompu une ou plusieurs fois par -O- ou -NT₆-, cycloalkyle comportant 5 à 12 atomes de carbone, phényle, phényle qui est substitué par un groupe alkyle comportant 1 à 4 atomes de carbone, alcényle comportant 3 à 8 atomes de carbone, phénylalkyle comportant 1 à 4 atomes de carbone dans le fragment alkyle ou hydroxyalkyle comportant 2 à 4 atomes de carbone,
T₆ est un atome d'hydrogène, un groupe alkyle comportant 1 à 18 atomes de carbone, cycloalkyle comportant 5 à 12 atomes de carbone, alcényle comportant 3 à 8 atomes de carbone, phényle, phényle qui est substitué par un groupe alkyle comportant 1 à 4 atomes de carbone, phénylalkyle comportant 1 à 4 atomes de carbone dans le fragment alkyle,
T₇ est un atome d'hydrogène, un groupe alkyle comportant 1 à 18 atomes de carbone, phényle qui est non substitué ou substitué par un groupe hydroxyle, phénylakyle comportant 1 à 4 atomes de carbone dans le fragment alkyle, ou - CH₂OT₈,
T₈ est un groupe alkyle comportant 1 à 18 atomes de carbone, alcényle comportant 3 à 8 atomes de carbone, cycloalkyle comportant 5 à 10 atomes de carbone, phényle, phényle qui est substitué par un groupe alkyle comportant 1 à 4 atomes de carbone, ou phénylalkyle comportant 1 à 4 atomes de carbone dans le fragment alkyle.
T₉ est un groupe alkylène comportant 2 à 8 atomes de carbone, alcénylène comportant 4 à 8 atomes de carbone, alcynylène comportant 4 atomes de carbone, cyclohexylène, alkylène qui comporte 2 à 8 atomes de carbone et est interrompu une ou plusieurs fois par -O-, ou un radical de formule - CH₂CH(OH)CH₂OT₁₁OCH₂CH(OH)CH₂- ou -CH₂-C(CH₂OH)₂-CH₂-,
T₁₀ est un groupe alkylène qui comporte 2 à 20 atomes de carbone et peut être interrompu une ou plusieurs fois par -O-, ou un groupe cyclohexylène,
T₁₁ est un groupe alkylène comportant 2 à 8 atomes de carbone, alkylène qui comporte 2 à 18 atomes de carbone et est interrompu une ou plusieurs fois par -O-, 1,3-cyclohexylène, 1,4-cyclohexylène, 1,3-phénylène ou 1,4-phénylène, ou
T₁₀ et T₆, conjointement avec les deux atomes d'azote, sont un cycle pipérazine ; dans les composés de formule (IIc)
R'₂ est un groupe alkyle en C₁ à C₁₂ et k est un nombre de 1 à 4 ;
dans les composés de formule (III)
u vaut 1 ou 2 et r est un nombre entier de 1 à 3, les substituants
Y₁ indépendamment les uns des autres sont un atome d'hydrogène, un groupe hydroxyle, phényle ou un atome d'halogène, un groupe halogénométhyle, alkyle comportant 1 à 12 atomes de carbone, alcoxy comportant 1 à 18 atomes de carbone, alcoxy comportant 1 à 18 atomes de carbone qui est substitué par un groupe - COO(alkyle en C₁ à C₁₈); si u vaut 1,
Y₂ est un groupe alkyle comportant 1 à 18 atomes de carbone, phényle qui est non substitué ou substitué par un groupe hydroxyle, un atome d'halogène, un groupe alkyle ou alcoxy comportant 1 à 18 atomes de carbone ;
alkyle qui a 1 à 12 atomes de carbone et est substitué par -COOH, -COOY₈, - CONH₂, -CONHY₈, -CONY₉Y₁₀, -NH₂, -NHY₉, -NY₉Y₁₀, -NHCOY₁₁, -CN et/ou - OCOY₁₁;
alkyle qui a 4 à 20 atomes de carbone, est interrompu par un ou plusieurs atomes d'oxygène et est non substitué ou substitué par un groupe hydroxyle ou alcoxy comportant 1 à 12 atomes de carbone, alcényle comportant 3 à 6 atomes de carbone, glycidyle, cyclohexyle qui est non substitué ou substitué par un groupe hydroxyle, alkyle comportant 1 à 4 atomes de carbone et/ou -OCOY₁₁, phénylalkyle qui comporte 1 à 5 atomes de carbone dans le fragment alkyle et est non substitué ou substitué par un groupe hydroxyle, un atome de chlore et/ou un groupe méthyle, - COY₁₂ ou -SO₂Y₁₃, ou
si u vaut 2,
Y₂ est un groupe alkylène comportant 2 à 16 atomes de carbone, alcénylène comportant 4 à 12 atomes de carbone, xylylène, alkylène qui comporte 3 à 20 atomes de carbone, est interrompu par un ou plusieurs atomes -O- et/ou est substitué par un groupe hydroxyle, -CH₂CH(OH)CH₂-O-Y₁₅-OCH₂CH(OH)CH₂, -CO-Y₁₆-CO-, -CO-NH-Y₁₇-NH-CO- ou -(CH₂)ₘ-CO₂-Y₁₈-OCO-(CH₂)ₘ, où
m vaut 1, 2 ou 3,
Y₈ est un groupe alkyle comportant 1 à 18 atomes de carbone, alcényle comportant 3 à 18 atomes de carbone, alkyle qui comporte 3 à 20 atomes de carbone, est interrompu par un ou plusieurs atomes d'oxygène ou de soufre ou -NT₆- et/ou est substitué par un groupe hydroxyle, alkyle qui comporte 1 à 4 atomes de carbone et est substitué par -P(O)(OY₁₄)₂, -NY₉Y₁₀ ou -OCOY₁₁ et/ou hydroxyle, alcényle comportant 3 à 18 atomes de carbone, glycidyle, ou phénylalkyle comportant 1 à 5 atomes de carbone dans le fragment alkyle,
Y₉ et Y₁₀ indépendamment l'un de l'autre sont un groupe alkyle comportant 1 à 12 atomes de carbone, alcoxyalkyle comportant 3 à 12 atomes de carbone, dialkylaminoalkyle comportant 4 à 16 atomes de carbone ou cyclohexyle comportant 5 à 12 atomes de carbone, ou bien Y₉ et Y₁₀ sont ensemble un groupe alkylène, oxaalkylène ou azaalkylène comportant dans chaque cas 3 à 9 atomes de carbone,
Y₁₁ est un groupe alkyle comportant 1 à 18 atomes de carbone, alcényle comportant 2 à 18 atomes de carbone ou phényle,
Y₁₂ est un groupe alkyle comportant 1 à 18 atomes de carbone, alcényle comportant 2 à 18 atomes de carbone, phényle, alcoxy comportant 1 à 12 atomes de carbone, phénoxy, alkylamino comportant 1 à 12 atomes de carbone ou phénylamino,
Y₁₃ est un groupe alkyle comportant 1 à 18 atomes de carbone, phényle ou alkylphényle comportant 1 à 8 atomes de carbone dans le radical alkyle,
Y₁₄ est un groupe alkyle comportant 1 à 12 atomes de carbone ou phényle,
Y₁₅ est un groupe alkylène comprenant 2 à 10 atomes de carbone, ou un groupe -phénylène-M-phénylène
où M est -O-, -S-, -SO₂-, -CH₂- ou -C(CH₃)₂-,
Y₁₆ est un groupe alkylène, oxaalkylène ou thiaalkylène comportant dans
chaque cas 2 à 10 atomes de carbone, phénylène ou alcénylène comportant 2 à 6 atomes de carbone,
Y₁₇ est un groupe alkylène comportant 2 à 10 atomes de carbone, phénylène ou alkylphénylène comportant 1 à 11 atomes de carbone dans le fragment alkyle, et
Y₁₈ est un groupe alkylène comportant 2 à 10 atomes de carbone ou alkylène qui comporte 4 à 20 atomes de carbone et est interrompu une ou plusieurs fois par un atome d'oxygène ;
dans les composés de formule (IV), x est un nombre entier de 1 à 3 et les substituants L sont indépendamment les uns des autres un atome d'hydrogène, un groupe alkyle, alcoxy ou alkylthio comportant dans chaque cas 1 à 22 atomes de carbone, phénoxy ou phénylthio.

7. Composition selon la revendication 1, dans laquelle
les 2-hydroxybenzophénones sont les dérivés 4-hydroxy, 4-méthoxy, 4-octyloxy, 4-décyloxy, 4-dodécyloxy, 4-benzyloxy et 2'-hydroxy-4,4'-diméthoxy ;
les 2-(2'-hydroxyphényl)benzotriazoles sont le 2-(2'-hydroxy-5'-méthylphényl)benzotriazole, le 2-(3',5'-di-tert-butyl-2'-hydroxyphényl)benzotriazole, le 2-(5'-tert-butyl-2'-hydroxyphényl)benzotriazole, le 2-(2'-hydroxy-5'-(1,1,3,3-tétraméthylbutyl)phényl)benzotriazole, le 2-(3',5'-di-tert-butyl-2'-hydroxyphényl)-5-chloro-benzotriazole, le 2-(3'-tert-butyl-2'-hydroxy-5'-méthylphényl)-5-chloro-benzotriazole, le 2-(3'-sec-butyl-5'-tert-butyl-2'-hydroxyphényl)benzotriazole, le 2-(2'-hydroxy-4'-octyloxyphényl)benzotriazole, le 2-(3',5'-di-tert-amyl-2'-hydroxyphényl)benzotriazole, le 2-(3',5'-bis-(α,α-diméthylbenzyl)-2'-hydroxyphényl)benzotriazole, le 2-(3'-tert-butyl-2'-hydroxy-5'-(2-octyloxycarbonyléthyl)phényl)-5-chloro-benzotriazole, le 2-(3'-tert-butyl-5'-[2-(2-éthylhexyl-oxy)-carbonyléthyl]-2'-hydroxyphényl)-5-chloro-benzotriazole, le 2-(3'-tert-butyl-2'-hydroxy-5'-(2-méthoxycarbonyléthyl)phényl)-5-chloro-benzotriazole, le 2-(3'-tert-butyl-2'-hydroxy-5'-(2-méthoxycarbonyléthyl)phényl)benzotriazole, le 2-(3'-tert-butyl-2'-hydroxy-5'-(2-octyloxycarbonyl-éthyl)phényl)benzotriazole, le 2-(3'-tert-butyl-5'-[2-(2-éthylhexyloxy)carbonyléthyl]-2'-hydroxyphényl)benzotriazole, le 2-(3'-dodécyl-2'-hydroxy-5'-méthylphényl)benzotriazole, le 2-(3'-tert-butyl-2'-hydroxy-5'-(2-isooctyloxycarbonyléthyl)phénylbenzotriazole, le 2,2'-méthylène-bis[4-(1,1,3,3-tétraméthylbutyl)-6-benzotriazole-2-ylphénol] ; le produit de transestérification du 2-[3'-tert-butyl-5'-(2-méthoxycarbonyléthyl)-2'-hydroxyphényl]-2H-benzotriazole avec du poly(éthylène glycol) 300 ; 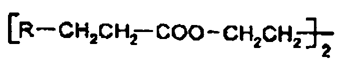 où R = 3'-tert-butyl-4'-hydroxy-5'-2H-benzotriazol-2-ylphényle, 2-[2'-hydroxy-3'-(α,α-diméthylbenzyl)-5'-(1,1,3,3-tétraméthylbutyl)-phényl]-benzotriazole ; 2-[2'-hydroxy-3'-(1,1,3,3-tétraméthylbutyl)-5'-(α,α-diméthylbenzyl)-phényl]benzotriazole ;
les 2-(2-hydroxyphényl)-1,3,5-triazines sont la 2,4,6-tris(2-hydroxy-4-octyloxyphényl)-1,3,5-triazine, la 2-(2-hydroxy-4-octyloxyphényl)-4,6-bis(2,4-diméthylphényl)-1,3,5-triazine, la 2-(2,4-dihydroxyphényl)-4,6-bis(2,4-diméthylphényl)-1,3,5-triazine, la 2,4-bis(2-hydroxy-4-propyloxy-phényl)-6-(2,4-diméthylphényl)-1,3,5-triazine, la 2-(2-hydroxy-4-octyloxyphényl)-4,6-bis(4-méthylphényl)-1,3,5-triazine, la 2-(2-hydroxy-4-dodécyloxyphényl)-4,6-bis(2,4-diméthylphényl)-1,3,5-triazine, la 2-(2-hydroxy-4-Mdécyloxyphényl)-4,6-bis(2,4-diméthylphényl)-1,3,5-triazine, la 2-[2-hydroxy-4-(2-hydroxy-3-butyloxy-propoxy)phényl]-4,6-bis(2,4-diméthyl)-1,3,5-triazine, la 2-[2-hydroxy-4-(2-hydroxy-3-octyloxy-propyloxy)-phényl]-4,6-bis(2,4-diméthyl)-1,3,5-triazine, la 2-[4-dodécyloxy/tridécyloxy-2-hydroxypropoxy)-2-hydroxy-phényl]-4,6-bis(2,4-diméthylphényl)-1,3,5-triazine, la 2-[2-hydroxy-4-(2-hydroxy-3-dodécyloxy-propoxy)-phényl]-4,6-bis(2,4-diméthyl-phényl)-1,3,5-triazine, la 2-(2-hydroxy-4-hexyloxy)phényl-4,6-diphényl-1,3,5-triazine, la 2-(2-hydroxy-4-méthoxyphényl)-4,6-diphényl-1,3,5-triazine, la 2,4,6-tris(2-hydroxy-4-(3-butoxy-2-hydroxy-propoxy)phényl]-1,3,5-triazine, la 2-(2-hydroxyphényl)-4-(4-méthoxyphényl)-6-phényl-1,3,5-triazine, la 2-{2-hydroxy-4-[3-(2-éthylhexyl-1-oxy)-2-hydroxypropyloxy]phényl}-4,6-bis(2,4-diméthylphényl)-1,3,5-triazine ou la 2-(2-hydroxy-4-(2-éthylhexyl)oxy)phényl-4,6-di(4-phényl)-phényl-1,3,5-triazine.

8. Composition selon la revendication 1, dans laquelle les hydroxyphényl triazines répondent aux formules 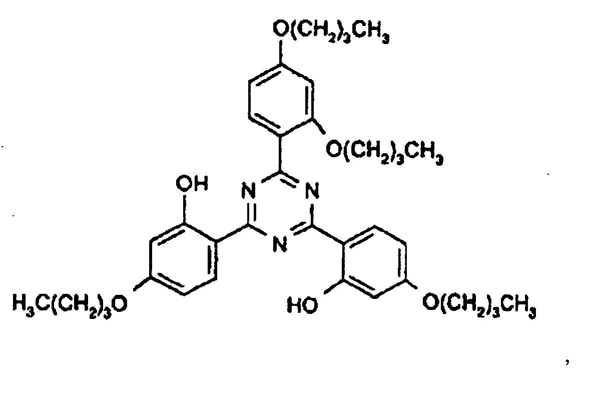 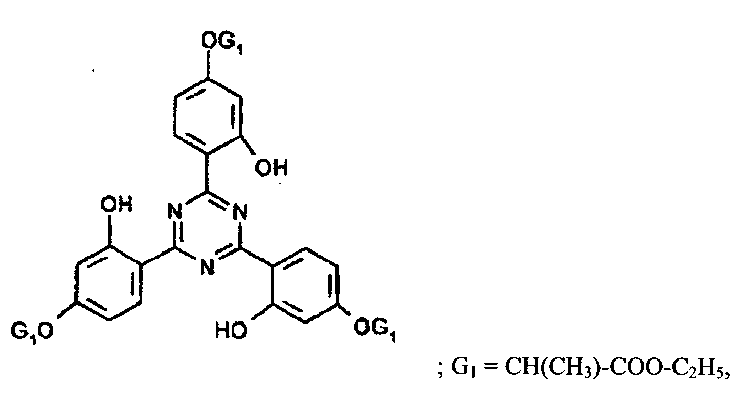 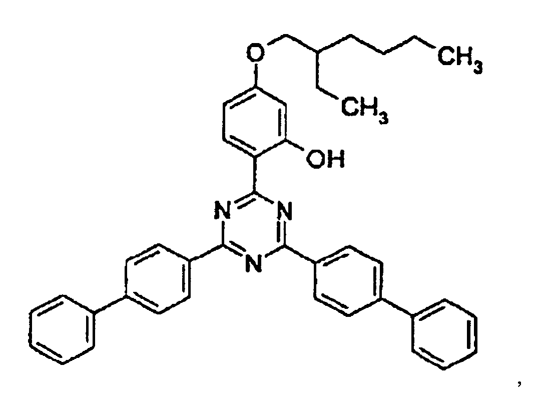 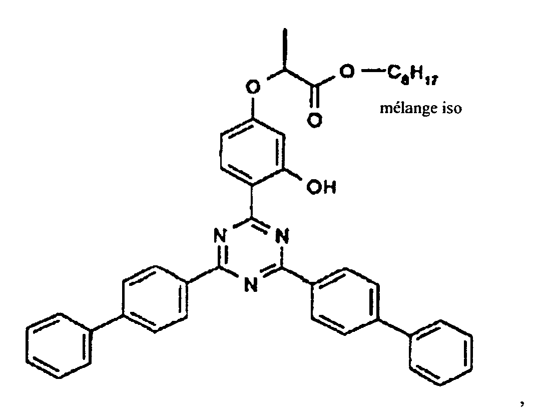 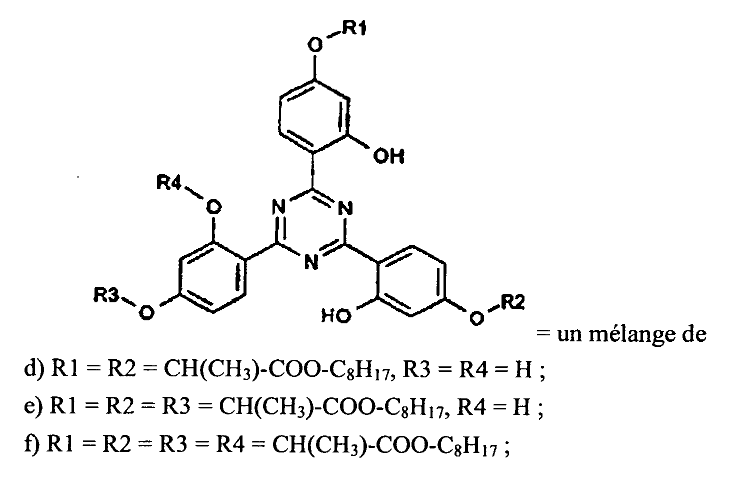 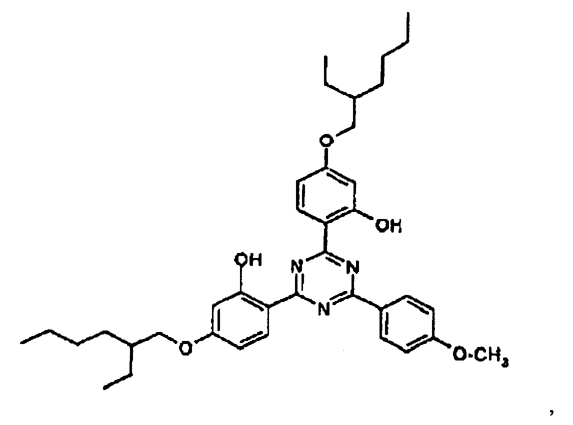 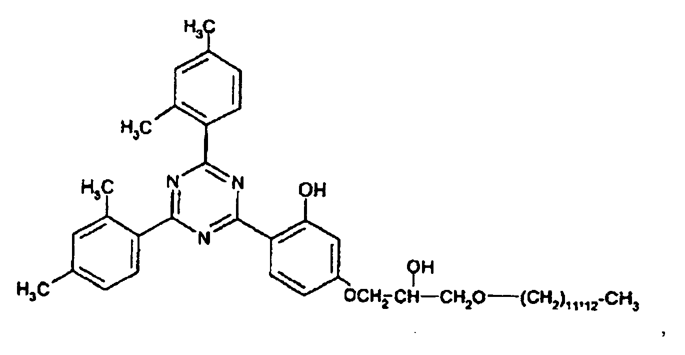 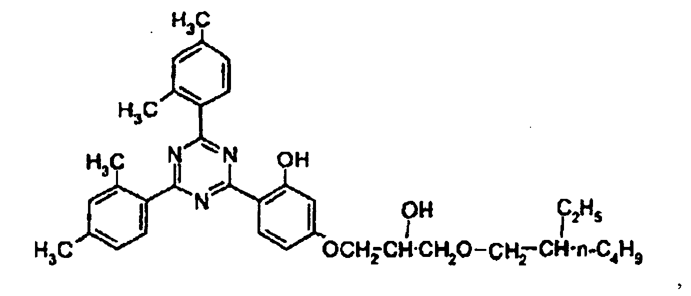 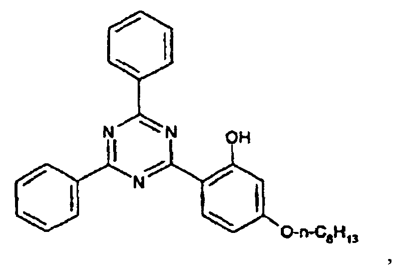 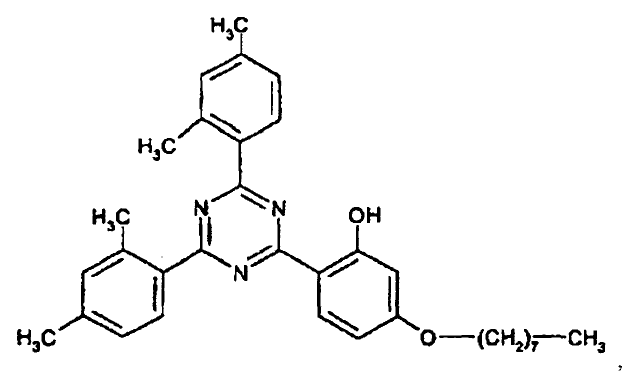 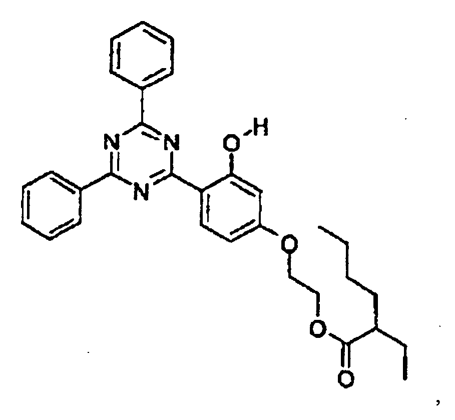 ou

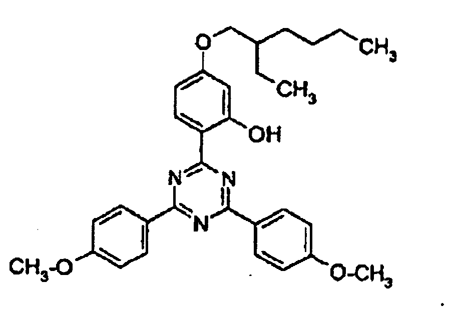

9. Composition selon la revendication 1, dans laquelle le composé antimicrobien est présent en une quantité de 0,005 % à 5 % en poids, par rapport au poids du polymère thermoplastique ou réticulable.

10. Composition selon la revendication 1, dans laquelle l'agent anti-UV est présent en une quantité de 0,01 % à 10 % en poids, par rapport au poids du polymère thermoplastique ou réticulable.

11. Composition selon la revendication 1, dans laquelle le rapport en poids entre l'agent anti-UV et le composé antimicrobien est de 100 : 1 à 1 : 10.

12. Procédé pour réduire le jaunissement lors d'une exposition à un rayonnement actinique d'une composition de polymère thermoplastique ou réticulable, ledit procédé comprenant l'incorporation dans et/ou la réticulation ou la polymérisation a1) des résines urée-formaldéhyde réticulables, une résine mélamine-formaldéhyde réticulable, une résine mélamine-formaldéhyde-phénol réticulable, une résine époxy réticulable, un poly(uréthane) réticulable, un caoutchouc réticulable, une résine acrylique ou méthacrylique réticulable ou une résine poly(ester) insaturé réticulable ; ou a2) un monomère polymérisable qui est un dérivé d'acide acrylique ou méthacrylique ; ou a3) un poly(ester) thermoplastique, un poly(acrylate) ou méthacrylate thermoplastique, un poly(amide) thermoplastique, un poly(styrène) thermoplastique, un polymère thermoplastique contenant un ou des halogènes, un poly(acétal) thermoplastique ou un poly(uréthane) thermoplastique ; ou
a4) un mélange des composants de a1 ) à a3) ; dans lequel est incorporé b) un composé antimicrobien choisi dans le groupe consistant en le 2-phényl phénol, le 2,4,4'-trichloro-2'-hydroxydiphényléther, le 4,4'-dichloro-2-hydroxydiphényl-éther, le 2,2'-méthylènebis-(4-chloro-phénol), le 4-(2-t-butyl-5-méthylphénoxy)-phénol, la 3-(4-chloro-phényl)-1-(3,4-dichloro-phényl)urée, le 2,4,6-trichlorophénol, AgCl, AgNO₃, Ag₂SO₄, l'argent-zéolite, l'argent-verre, l'argent-zirconate, l'argent-apatite, le thiabendazole, le tébuconazole, l'ester de méthyle d'acide 1H-benzimidazol-2-ylcarbamique, la 10,10'-oxybis-phénoxyarsine, le zinc pyrithione, la 2-n-octyl-4-isothiazolin-3-one, la n-butyl-1,2-benzisothiazolin-3-one, la 4,5-di-chloro-N-n-octyl-isothiazolin-3-one et leurs mélanges ; et c) un agent anti-UV choisi dans le groupe consistant en les hydroxy benzophénones, les hydroxyphényl benzotriazoles, les anilides d'acide oxalique, les hydroxyphényl triazines et leur mélanges.
